# EUROPEAN PATENT APPLICATION

(11) **EP 4 472 312 A1**
(43) Date of publication of application: **04.12.2024**
(21) Application number: 22922853.1
(22) Date of filing: 29.01.2022
(51) Int. Cl.: H04W 72/04

(54) **WIRELESS COMMUNICATION METHODS AND TERMINAL DEVICES**

(71) Applicant: GUANGDONG OPPO MOBILE TELECOMMUNICATIONS CORP., LTD., Dongguan, Guangdong 523860 (CN)
(72) Inventor: ZHAO, Zhenshan, Dongguan, Guangdong 523860 (CN); MA, Teng, Dongguan, Guangdong 523860 (CN)
(74) Representative: RGTH
(86) International application number: PCT/CN2022/074907
(87) International publication number: WO 2023/142016

(57) **Abstract**

Embodiments of this application provide a wireless communication method and a terminal device. A first terminal device and a second terminal device exchange capability information, for example, whether the second terminal device supports a spatial domain reception filter, whether the second terminal device has beam correspondence, or whether the second terminal device supports beam correspondence, and the first terminal device executes a corresponding process such as beam selection or beam indication according to the capability information of the second terminal device. The wireless communication method includes: obtaining, by a first terminal device, first information and/or second information, where the first information is used to indicate whether a second terminal device supports a spatial domain reception filter, and the second information is used to indicate whether the second terminal device supports beam correspondence, or the second information is used to indicate whether the second terminal device has a beam correspondence capability.

## Description

### TECHNICAL FIELD

Embodiments of this application relate to the field of communications, and more specifically, to a wireless communication method and a terminal device.

### BACKGROUND

In a sidelink communications system, a transmit end needs to determine an optimal spatial domain transmission filter and/or a receive end needs to determine an optimal spatial domain reception filter. However, how the transmit end specifically determines the optimal spatial domain transmission filter and/or how the receive end specifically determines the optimal spatial domain reception filter is a problem that needs to be resolved.

### SUMMARY

Embodiments of this application provide a wireless communication method and a terminal device. A first terminal device and a second terminal device exchange capability information, for example, whether the second terminal device supports a spatial domain reception filter, whether the second terminal device has beam correspondence, or whether the second terminal device supports beam correspondence, and the first terminal device executes a corresponding process such as beam selection or beam indication according to the capability information of the second terminal device.

According to a first aspect, a wireless communication method is provided, and the method includes:
obtaining, by a first terminal device, first information and/or second information,
where the first information is used to indicate whether a second terminal device supports a spatial domain reception filter; and
the second information is used to indicate whether the second terminal device supports beam correspondence, or the second information is used to indicate whether the second terminal device has a beam correspondence capability.

According to a second aspect, a wireless communication method is provided, and the method includes:
sending, by a second terminal device, first information and/or second information to a first terminal device,
where the first information is used to indicate whether the second terminal device supports a spatial domain reception filter; and
the second information is used to indicate whether the second terminal device supports beam correspondence, or the second information is used to indicate whether the second terminal device has a beam correspondence capability.

According to a third aspect, a terminal device is provided and configured to execute the method in the first aspect.

Specifically, the terminal device includes a functional module configured to execute the method in the first aspect.

According to a fourth aspect, a terminal device is provided and configured to execute the method in the second aspect.

Specifically, the terminal device includes a functional module configured to execute the method in the second aspect.

According to a fifth aspect, a terminal device is provided, and includes a processor and a memory. The memory is configured to store a computer program, and the processor is configured to invoke and run the computer program stored in the memory, to cause the terminal device to execute the method in the first aspect.

According to a sixth aspect, a terminal device is provided, and includes a processor and a memory. The memory is configured to store a computer program, and the processor is configured to invoke and run the computer program stored in the memory, to cause the terminal device to execute the method in the second aspect.

According to a seventh aspect, an apparatus is provided and configured to implement a method according to any one of the first aspect and the second aspect.

Specifically, the apparatus includes a processor, configured to invoke a computer program from a memory and run the computer program, to cause a device on which the apparatus is installed to execute a method according to any one of the first aspect and the second aspect.

According to an eighth aspect, a computer-readable storage medium is provided and configured to store a computer program. The computer program causes a computer to execute a method according to any one of the first aspect and the second aspect.

According to a ninth aspect, a computer program product is provided, and includes computer program instructions. The computer program instructions cause a computer to execute a method according to any one of the first aspect and the second aspect.

According to a tenth aspect, a computer program is provided, and when the computer program runs on a computer, the computer executes a method according to any one of the first aspect and the second aspect.

By using the foregoing technical solutions, a first terminal device obtains first information and/or second information, where the first information is used to indicate whether a second terminal device supports a spatial domain reception filter, and the second information is used to indicate whether the second terminal device supports beam correspondence, or the second information is used to indicate whether the second terminal device has a beam correspondence capability. Therefore, the first terminal device executes a corresponding process such as beam selection or beam indication according to the first information and/or the second information.

### BRIEF DESCRIPTION OF DRAWINGS

FIG. 1 is a schematic diagram of an architecture of a communications system according to this application.
FIG. 2 is a schematic diagram of an architecture of another communications system according to this application.
FIG. 3 is a schematic diagram of sidelink communication within network coverage according to this application.
FIG. 4 is a schematic diagram of sidelink communication with partial network coverage according to this application.
FIG. 5 is a schematic diagram of sidelink communication out of network coverage according to this application.
FIG. 6 is a schematic diagram of sidelink communication in which a central control node exists according to this application.
FIG. 7 is a schematic diagram of unicast sidelink communication according to this application.
FIG. 8 is a schematic diagram of multicast sidelink communication according to this application.
FIG. 9 is a schematic diagram of broadcast sidelink communication according to this application.
FIG. 10 is a schematic diagram of a slot structure in NR-V2X according to this application.
FIG. 11 is a schematic diagram of a time-frequency position of a SL CSI-RS according to this application.
FIG. 12 is a schematic diagram of not using analog beams and using analog beams according to this application.
FIG. 13 is a schematic diagram of configuring a TCI state of a PDSCH according to this application.
FIG. 14 is a schematic flowchart of a wireless communication method according to an embodiment of this application.
FIG. 15 is a schematic diagram of sending a CSI-RS and receiving a CSI-RS according to an embodiment of this application.
FIG. 16 is a schematic block diagram of a terminal device according to an embodiment of this application.
FIG. 17 is a schematic block diagram of another terminal device according to an embodiment of this application.
FIG. 18 is a schematic block diagram of a communications device according to an embodiment of this application.
FIG. 19 is a schematic block diagram of an apparatus according to an embodiment of this application.
FIG. 20 is a schematic block diagram of a communications system according to an embodiment of this application.

### DESCRIPTION OF EMBODIMENTS

The following describes the technical solutions in embodiments of this application with reference to the accompanying drawings in embodiments of this application. Apparently, the described embodiments are some rather than all of embodiments of this application. For embodiments of this application, all other embodiments obtained by a person of ordinary skill in the art without creative efforts fall within the protection scope of this application.

The technical solutions in embodiments of this application may be applied to various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, general packet radio service (General Packet Radio Service, GPRS), a long-term evolution (Long Term Evolution, LTE) system, an advanced long-term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), a wireless local area network (Wireless Local Area Networks, WLAN), wireless fidelity (Wireless Fidelity, WiFi), a 5th-generation (5th-Generation, 5G) system, or another communications system.

Generally, a quantity of connections supported by a conventional communications system is limited and is also easy to implement. However, with development of communication technologies, a mobile communications system not only supports conventional communication, but also supports, for example, device-to-device (Device to Device, D2D) communication, machine to machine (Machine to Machine, M2M) communication, machine type communication (Machine Type Communication, MTC), vehicle to vehicle (Vehicle to Vehicle, V2V) communication, or vehicle-to-everything (Vehicle to everything, V2X) communication. Embodiments of this application may also be applied to these communications systems.

Optionally, a communications system in embodiments of this application may be applied to a carrier aggregation (Carrier Aggregation, CA) scenario, a dual connectivity (Dual Connectivity, DC) scenario, or a standalone (Standalone, SA) networking scenario.

Optionally, a communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile site, a mobile station, a remote station, a remote terminal, a mobile device, a user terminal, a terminal, a wireless communications device, a user agent, a user apparatus, or the like.

The terminal device may be a station (STATION, ST) in a WLAN, may be a cellular phone, a cordless phone, a session initiation system (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, a terminal device in a future evolved public land mobile network (Public Land Mobile Network, PLMN), or the like.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured device, a large-sized, and a device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, a base transceiver station (Base Transceiver Station, BTS) in GSM or CDMA, may be a NodeB (NodeB, NB) in WCDMA, or may be an evolved Node B (Evolutional Node B, eNB or eNodeB) in LTE, or a relay station or an access point, or a vehicle-mounted device, a wearable device, a network device or a gNB (gNB) in an NR network, or a network device in a future evolved PLMN network, or a network device in an NTN network, or the like.

By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of a small coverage range and low transmit power, and are applicable to providing a high-rate data transmission service.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

The terms used in implementations of this application are only used to illustrate specific embodiments of this application, but are not intended to limit this application. In the specification, claims, and accompanying drawings of this application, the terms "first", "second", "third", "fourth", "A^{th}", "B^{th}", and the like are intended to distinguish between different objects but do not describe a particular order. In addition, the terms "include" and "have" and any variations thereof are intended to cover a non-exclusive inclusion.

It should be understood that, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefining" and "pre-configuration" may be implemented by pre-storing a corresponding code or table in a device (for example, including the terminal device and the network device) or in other manners that may be used for indicating related information, and a specific implementation thereof is not limited in this application. For example, pre-defining may refer to being defined in a protocol.

In embodiments of this application, the "protocol" may refer to a standard protocol in the communication field, which may include, for example, an LTE protocol, an NR protocol, and a related protocol applied to a future communications system. This is not limited in this application.

To facilitate understanding of the technical solutions in embodiments of this application, the following describes the technical solutions in this application in detail by using specific embodiments. The following related technologies, as optional solutions, may be randomly combined with the technical solutions of embodiments of this application, all of which fall within the protection scope of embodiments of this application. Embodiments of this application include at least a part of the following content.

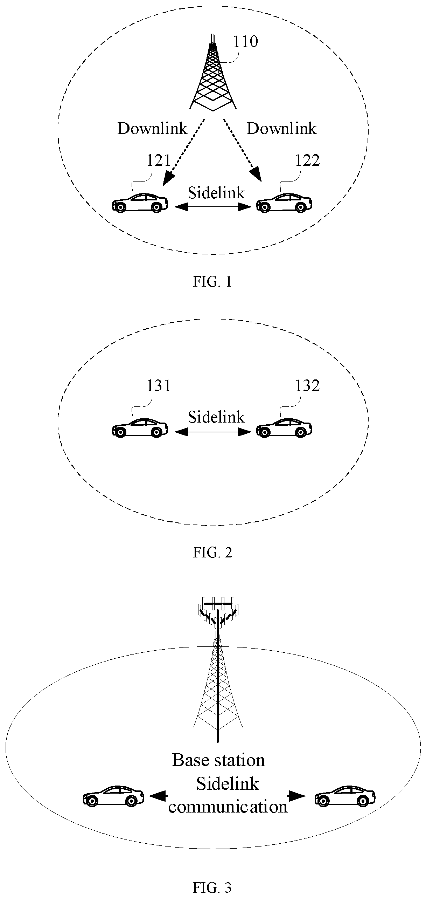

FIG. 1 is a schematic diagram of a communications system to which an embodiment of this application is applied. Transmission resources of vehicle-mounted terminals (a vehicle-mounted terminal 121 and a vehicle-mounted terminal 122) are allocated by a base station 110, and the vehicle-mounted terminals send data on a sidelink according to the resources allocated by the base station 110. Specifically, the base station 110 may allocate, to a terminal, a resource for a single time of transmission, or may allocate, to the terminal, a resource for semi-static transmission.

FIG. 2 is a schematic diagram of another communications system to which an embodiment of this application is applied. Vehicle-mounted terminals (a vehicle-mounted terminal 131 and a vehicle-mounted terminal 132) independently select transmission resources from resources of a sidelink to perform data transmission. Optionally, the vehicle-mounted terminals may randomly select transmission resources, or select transmission resources through listening.

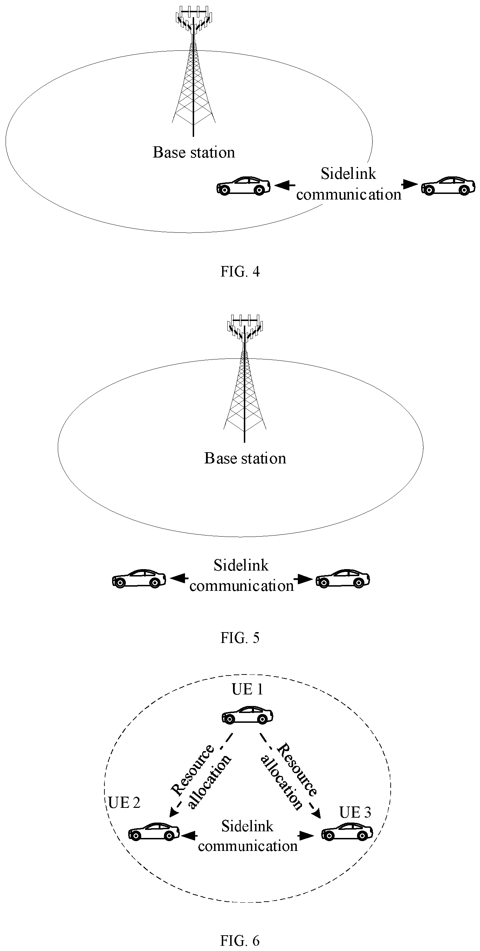

It should be noted that, sidelink communication may be divided, depending on a network coverage status of a location where a terminal that performs communication is located, into sidelink communication within network coverage, as shown in FIG. 3; sidelink communication with partial network coverage, as shown in FIG. 4; and sidelink communication out of network coverage, as shown in FIG. 5.

As shown in FIG. 3, in sidelink communication within network coverage, all terminals that perform sidelink communication are located within a coverage range of a base station. Therefore, all the terminals may perform sidelink communication based on a same sidelink configuration by receiving configuration signalling of the base station.

As shown in FIG. 4, in a case of sidelink communication with partial network coverage, some terminals that perform sidelink communication are located within a coverage range of a base station. These terminals can receive configuration signalling of the base station, and perform sidelink communication according to a configuration of the base station. However, a terminal located outside the network coverage range cannot receive the configuration signalling of the base station. In this case, the terminal outside the network coverage range determines a sidelink configuration according to pre-configuration (pre-configuration) information and information carried in a physical sidelink broadcast channel (Physical Sidelink Broadcast Channel, PSBCH) sent by a terminal located within the network coverage range, and performs sidelink communication.

As shown in FIG. 5, for sidelink communication out of network coverage, all terminals that perform sidelink communication are located outside a network coverage range, and all the terminals determine a sidelink configuration according to pre-configuration (pre-configuration) information and perform sidelink communication.

As shown in FIG. 6, for sidelink communication with a central control node, a plurality of terminals form a communications group. The communications group has a central control node, which may also be referred to as a cluster header terminal (Cluster Header, CH). The central control node has one of the following functions: being responsible for functions such as establishing a communications group, joining and/or leaving of a group member, performing resource coordination, allocating a sidelink transmission resource to another terminal, receiving sidelink feedback information of another terminal, or performing resource coordination with another communications group.

It should be noted that device-to-device communication is a sidelink (Sidelink, SL) transmission technology based on device-to-device (Device to Device, D2D). Different from a way that communication data is received or sent through a base station in a conventional cellular system, D2D has higher spectral efficiency and a lower transmission delay. A vehicle-to-everything system adopts a device-to-device direct communication manner. Two transmission modes are defined in 3GPP, which are respectively denoted as a first mode (sidelink resource allocation mode 1) and a second mode (sidelink resource allocation mode 2).

First mode: A transmission resource of a terminal is allocated by a base station, and the terminal sends data on a sidelink according to the resource allocated by the base station. The base station may allocate, to the terminal, a resource for a single time of transmission, or may allocate, to the terminal, a resource for semi-static transmission. As shown in FIG. 3, a terminal is located within a coverage range of a network, and the network allocates, to the terminal, a transmission resource used for sidelink transmission.

Second mode: A terminal selects a resource from a resource pool to perform data transmission. As shown in FIG. 5, a terminal is located outside a coverage range of a cell, and the terminal independently selects a transmission resource from a pre-configured resource pool to perform sidelink transmission. Alternatively, as shown in FIG. 3, a terminal independently selects a transmission resource from a resource pool configured by a network to perform sidelink transmission.

In new radio vehicle-to-everything (New Radio - Vehicle to Everything, NR-V2X), autonomous driving is supported. Therefore, higher requirements are imposed on data interaction between vehicles, such as higher throughput, a lower delay, higher reliability, a larger coverage range, and more flexible resource allocation.

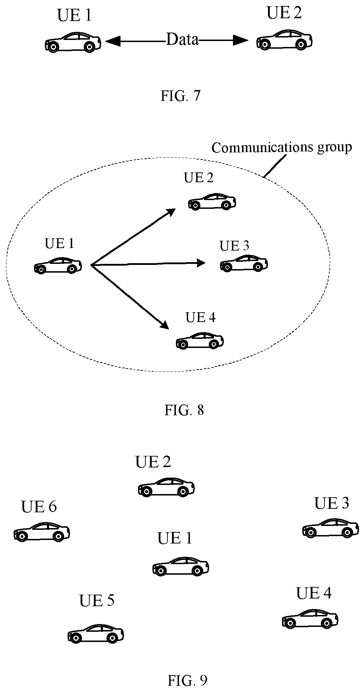

In LTE-V2X, a broadcast transmission manner is supported. In NR-V2X, a unicast transmission manner and a multicast transmission manner are introduced. For unicast transmission, a receive end terminal has only one terminal. As shown in FIG. 7, unicast transmission is performed between a UE 1 and a UE 2. For multicast transmission, receive ends are all terminals in a communications group, or all terminals within a specific transmission distance. As shown in FIG. 8, a UE 1, a UE 2, a UE 3, and a UE 4 form a communications group, where the UE 1 sends data, and the other terminal devices in the group are all receive end terminals. For a broadcast transmission manner, a receive end is any terminal around a transmit end terminal. As shown in FIG. 9, a UE 1 is a transmit end terminal, and the other terminals around the UE 1, that is, a UE 2 to a UE 6, are all receive end terminals.

To better understand embodiments of this application, a frame structure of an NR-V2X system related to this application is described.

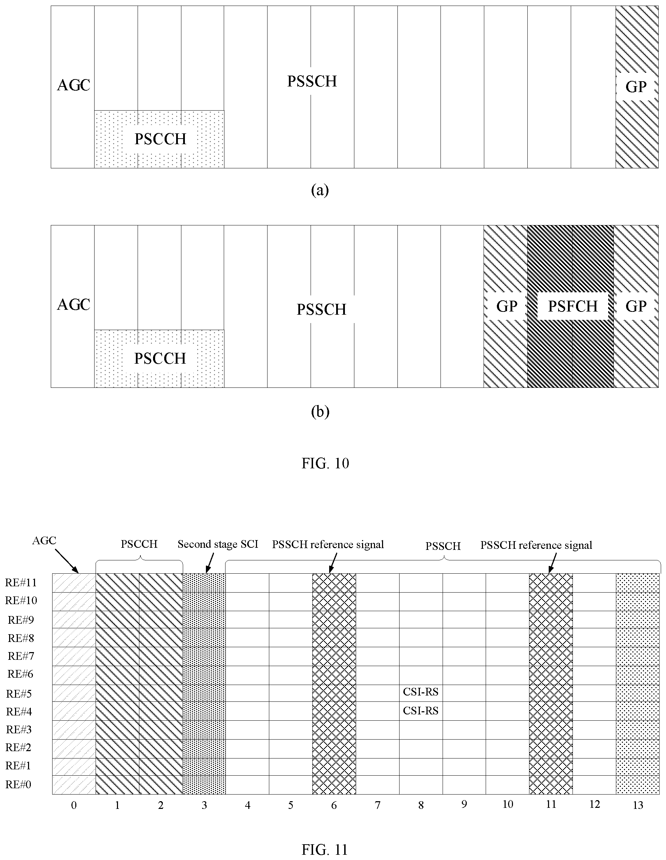

A slot structure in NR-V2X is shown in FIG. 10, where (a) in FIG. 10 shows a slot structure in which no physical sidelink feedback channel (Physical Sidelink Feedback Channel, PSFCH) is included, and (b) in FIG. 10 shows a slot structure including a PSFCH.

In NR-V2X, a physical sidelink control channel (Physical Sidelink Control Channel, PSCCH) starts from the second sidelink symbol of the slot in time domain, occupies two or three orthogonal frequency division multiplexing (Orthogonal frequency-division multiplexing, OFDM) symbols, and may occupy {10, 12 15, 20, 25} physical resource blocks (physical resource block, PRB) in frequency domain. To reduce complexity of blind detection performed by a UE on the PSCCH, only one PSCCH symbol quantity and only one PRB quantity are allowed to be configured in one resource pool. In addition, because a sub-channel is a minimum granularity for allocation of a physical sidelink shared channel (Physical Sidelink Shared Channel, PSSCH) resource in NR-V2X, a quantity of PRBs occupied by a PSCCH must be less than or equal to a quantity of PRBs included in one sub-channel in a resource pool. This avoids an additional limitation on selection or allocation of the PSSCH resource. A PSSCH also starts from the second sidelink symbol of the slot in time domain. The last time domain symbol in the slot is a guard period (Guard Period, GP) symbol, and the remaining symbols are mapped to the PSSCH. The first sidelink symbol in the slot is a repetition of the second sidelink symbol. Generally, a receive end terminal uses the first sidelink symbol as an automatic gain control (Auto gain control, AGC) symbol, and generally data on the symbol is not used for data demodulation. The PSSCH occupies M sub-channels in frequency domain, and each sub-channel includes N consecutive PRBs, as shown in (a) in FIG. 10.

When a slot includes a PSFCH channel, the last-but-one symbol and the last-but-two symbol in the slot are used for transmission of the PSFCH channel, and data on the last-but-two symbol is a repetition of data on the last-but-one symbol, and a time domain symbol before the PSFCH channel is used as a GP symbol, as shown in (b) in FIG. 10.

To better understand embodiments of this application, a sidelink (Sidelink, SL) CSI-RS related to this application is described.

An SL CSI-RS is supported in NR-V2X, and an SL CSI-RS may be sent when the following three conditions are met:
a UE sends a corresponding PSSCH, that is, the UE cannot send only an SL CSI-RS;
higher layer signalling activates reporting of sidelink channel state information (Channel State Information, CSI); and
in a case in which the higher layer signalling activates the reporting of the sidelink CSI, a corresponding bit in second stage SCI sent by the UE indicate the reporting of the sidelink CSI.

A maximum quantity of ports supported by the SL CSI-RS is 2. When the SL CSI-RS is sent on two ports, the SL CSI-RS on each port occupies two adjacent resource elements (Resource Element, RE) of a same OFDM symbol, and the SL CSI-RSs on the two ports occupy the same REs. Resources of the two ports are distinguished through code division. In one PRB, a quantity of SL CSI-RSs on each port is 1, that is, a density is 1. Therefore, in one PRB, the SL CSI-RS appears on a maximum of one orthogonal frequency division multiplexing (Orthogonal frequency-division multiplexing, OFDM) symbol. A specific position of the OFDM symbol is determined by a transmit end terminal. A position of an OFDM symbol in which an SL CSI-RS is located is indicated by a sidelink CSI-RS first symbol (*sl-CSI-RS-FirstSymbol*) parameter in PC5-radio resource control (Radio Resource Control, RRC).

A position of the first RE occupied by the SL CSI-RS in one PRB is indicated by a sidelink CSI-RS frequency domain allocation (*sl-CSI-RS-FreqAllocation*) parameter in PC5-RRC. If the SL CSI-RS is sent on one port, the parameter is a bitmap with a length of 12, which corresponds to 12 REs in one PRB. If the SL CSI-RS is sent on two ports, the parameter is a bitmap with a length of 6. In this case, the SL CSI-RS occupies two REs, that is, 2*f*(1)2*f*(1) and 2*f*(1) + 1, where *f*(1) indicates an index of a bit with a value of 1 in the foregoing bitmap. A frequency domain position of the SL CSI-RS is also determined by the transmit terminal. However, the determined frequency domain position of the SL CSI-RS cannot conflict with a phase tracking reference signal (Phase Tracking Reference Signal, PT-RS). FIG. 11 is a schematic diagram of a time-frequency position of an SL CSI-RS. In FIG. 11, a quantity of ports for the SL CSI-RS is 2, *sl-CSI-RS-FirstSymbol* is 8, and *sl-CSI-RS-FreqAllocation* is [*b*₅, *b*₄, *b*₃, *b*₂, *b*₁, *b*₀] = [0,0,0,1,0,0], that is, *f*(1) = 2, 2*f*(1) = 4, 2*f*(1) + 1 = 5, and the SL CSI-RS occupies RE#4 and RE#5.

To better understand embodiments of this application, a multi-beam system related to this application is described.

A design objective of an NR system or a 5G system includes high-bandwidth communication with a high frequency band (for example, a frequency band above 6 GHz). When a working frequency becomes higher, path loss in a transmission process increases, which affects a coverage capability of a high-frequency system. To effectively ensure coverage of an NR system with a high frequency band, an effective technical solution is based on a massive antenna array (Massive MIMO), to form a shaped beam with a larger gain, overcome propagation loss, and ensure system coverage.

Because a millimeter-wave antenna array has a shorter wavelength, a smaller antenna array spacing, and a smaller aperture, more physical antenna arrays may be integrated into a two-dimensional antenna array of a limited size. In addition, because a size of the millimeter-wave antenna array is limited, a digital beamforming manner cannot be used due to factors such as hardware complexity, costs, and power consumption. Instead, generally an analog beamforming manner is used, which may reduce implementation complexity of a device while enhancing network coverage.

A cell (sector) uses a relatively wide beam (beam) to cover the entire cell. Therefore, at each moment, a terminal device within a coverage range of the cell has an opportunity to obtain a transmission resource allocated by the system.

A multi-beam (Multi-beam) system of NR or 5G covers an entire cell by using different beams, that is, each beam covers a relatively small range, and an effect of covering the entire cell by using a plurality of beams is implemented through sweeping (sweeping) in time.

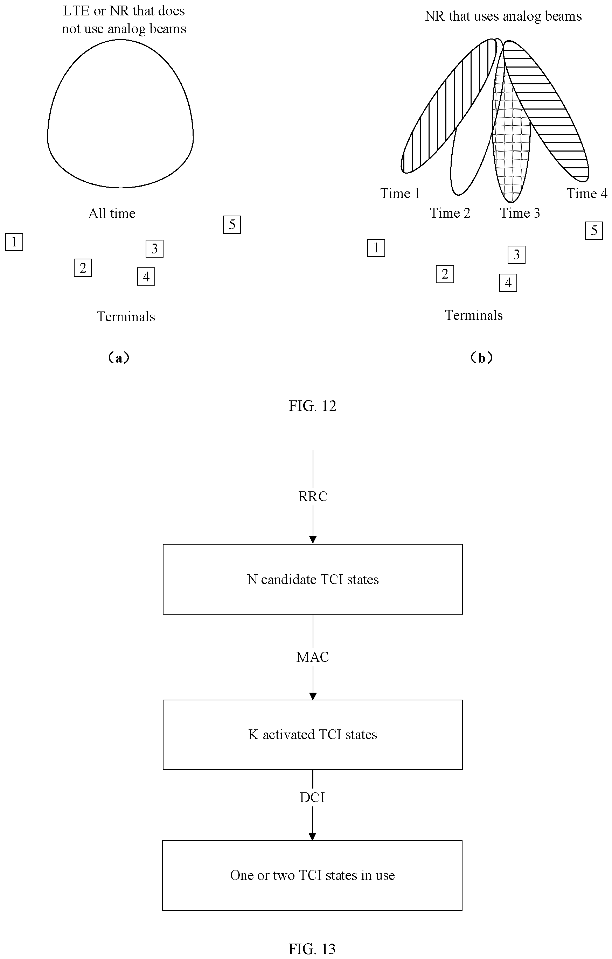

FIG. 12 is a schematic diagram of a system that does not use beamforming and a system that uses beamforming, where (a) in FIG. 12 is a conventional LTE or NR system that does not use beamforming, and (b) in FIG. 12 is an NR system that uses beamforming.

In (a) of FIG. 12, a network side of LTE or NR uses a wide beam to cover an entire cell, and users 1 to 5 may receive a network signal at any moment.

In contrast, in (b) of FIG. 12, a network side uses relatively narrow beams (for example, beams 1 to 4 in the figure), and different beams are used at different moments to cover different areas in a cell. For example, at a moment 1, the NR network side covers, by using the beam 1, an area in which a user 1 is located. At a moment 2, the NR network side covers, by using the beam 2, an area in which a user 2 is located. At a moment 3, the NR network side covers, by using the beam 3, an area in which a user 3 and a user 4 are located. At a moment 4, the NR network side covers, by using the beam 4, an area in which a user 5 is located.

In (b) of FIG. 12, because a network uses relatively narrow beams, transmit energy may be more concentrated, and therefore may cover a further distance. In addition, because the beams are relatively narrow, each beam can cover only some areas in the cell. Therefore, analog beamforming is "time for space".

Analog beamforming not only may be used for a network-side device but also may be used for a terminal. In addition, analog beamforming not only may be used for signal sending (referred to as a transmit beam) but also may be used for signal receiving (referred to as a receive beam).

Different beams (beam) may be identified by using different signals carried on the beams.

Different synchronization signal blocks (Synchronization Signal block, SS block) are transmitted on some different beams (beam), and a terminal device may distinguish the different beams (beam) by the different SS blocks.

Different channel state information reference signals (Channel State Information Reference Signal, CSI-RS) are transmitted on some different beams (beam), and a terminal device identifies the different beams (beam) by the CSI-RS signals or CSI-RS resources.

In a multi-beam (multi-beam) system, a physical downlink control channel (Physical Downlink Control Channel, PDCCH) and a physical downlink shared channel (Physical Downlink Shared Channel, PDSCH) may be transmitted by using different downlink transmit beams.

For a system with a carrier frequency below 6 GHz, usually there are no analog beams on a terminal side. Therefore, omni-directional antennas (or near omni-directional antennas) are used to receive signals sent by different downlink transmit beams of a base station.

For a millimeter-wave system, there may be an analog beam on a terminal side, and a corresponding downlink receive beam needs to be used to receive a signal sent by a corresponding downlink transmit beam. In this case, corresponding beam indication information (beam indication) is required to assist the terminal device in determining transmit beam related information on a network side or receive beam related information corresponding to the terminal side.

In an NR protocol, beam indication information does not directly indicate a beam, but indicates by a quasi co-located (Quasi-co-located, QCL) hypothesis (for example, a QCL hypothesis that a QCL type is "QCL-TypeD") between signals. On the terminal side, determining statistics collection feature of receiving of a corresponding channel or a corresponding signal is also based on the QCL hypothesis.

To better understand embodiments of this application, a QCL indication or hypothesis of downlink transmission related to this application is described.

When performing signal receiving, a terminal may improve a receiving algorithm by a feature of a transmission environment corresponding to data transmission, to improve receiving performance. For example, a statistics collection feature of a channel may be used to optimize a design and a parameter of a channel estimator. In an NR system, the features corresponding to data transmission are represented by QCL states (QCL-Info).

If downlink transmission comes from different transmission-reception points (Transmission Reception Point, TRP) or antenna panels (panel) or beams (beam), a feature of a transmission environment corresponding to data transmission may also change. Therefore, in the NR system, when transmitting a downlink control channel or a data channel, a network side indicates corresponding QCL state information to a terminal by a transmission configuration indication (Transmission Configuration Indicator, TCI) state.

A TCI state may include the following configurations:
a TCI state identifier (ID), used to identify a TCI state;
QCL information 1; and
QCL information 2 (optional).

One piece of QCL information includes the following information:
a QCL type (type) configuration, which may be one of QCL-TypeA, QCL-TypeB, QCL-TypeC, or QCL-TypeD; and
QCL reference signal configurations, which include an ID (ID) of a cell in which a reference signal is located, an ID (ID) of a bandwidth part (Band Width Part, BWP), and an identifier of the reference signal (which may be an ID of a CSI-RS resource or an index of a synchronization signal block).

If both the QCL information 1 and the QCL information 2 are configured, a QCL type of at least one piece of QCL information is one of QCL-TypeA, QCL-TypeB, or QCL-TypeC, and a QCL type of the other piece of QCL information must be QCL-TypeD.

Different QCL type configurations are defined as follows:
'QCL-TypeA': {Doppler shift (Doppler shift), Doppler spread (Doppler spread), average delay (average delay), delay spread (delay spread)};
'QCL-TypeB': {Doppler shift (Doppler shift), Doppler spread (Doppler spread)};
'QCL-TypeC': {Doppler shift (Doppler shift), average delay (average delay)}; and
'QCL-TypeD': {Spatial Rx parameter (Spatial Rx parameter)}.

In the NR system, the network side may indicate a corresponding TCI state for a downlink signal or a downlink channel.

If the network side configures, by the TCI state, a QCL reference signal of a target downlink channel or a target downlink signal as a reference SSB or a reference CSI-RS resource, and the QCL type is set to TypeA, TypeB, or TypeC, the terminal may assume that a large-scale parameter of the target downlink signal is the same as that of the reference SSB or the reference CSI-RS resource, and the large-scale parameter is determined by a QCL type configuration.

Similarly, if the network side configures, by the TCI state, a QCL reference signal of a target downlink channel or a target downlink signal as a reference SSB or a reference CSI-RS resource, and the QCL type is set to TypeD, the terminal may receive the target downlink channel or the target downlink signal by using a same receive beam (that is, Spatial Rx parameter) as that for receiving the reference SSB or the reference CSI-RS resource. Generally, the target downlink channel (or the target downlink signal) and the reference SSB or the reference CSI-RS resource of the target downlink channel (or the target downlink signal) are sent on the network side by a same TRP or a same panel or a same beam. If transmission TRPs or transmission panels or transmit beams of two downlink signals or two downlink channels are different, generally different TCI states are configured.

For a downlink control channel, a TCI state of a corresponding control resource set (Control Resource Set, CORESET) may be indicated by radio resource control (Radio Resource Control, RRC) signalling, or RRC signalling and medium access control (Media Access Control, MAC) signalling.

For a downlink data channel, an available TCI state set is indicated by RRC signalling, and some TCI states in the TCI state set are activated by MAC layer signalling. Finally, one or two TCI states are indicated from the activated TCI states by a TCI state indication field in downlink control information (Downlink Control Information, DCI), and are used for a PDSCH scheduled by the DCI. A case in which there are two TCI states is mainly for a scenario with a plurality of TRPs. For example, as shown in FIG. 13, a network device indicates N candidate TCI states by RRC signalling, activates K TCI states by MAC signalling, and finally indicates one or two TCI states in use from the activated TCI states by a TCI state indication field in DCI.

To better understand embodiments of this application, technical problems that exist in this application are described.

In an SL system, if a receive end supports sidelink receiving by using a receive beam, the following problems 1 to 3 need to be considered.

Problem 1: In the SL system, transmission manners such as unicast, multicast, and broadcast are supported. A receive end terminal needs to receive, at a same moment, sidelink data sent by a plurality of terminals around the receive end terminal. When the terminal uses beam-based sending or receiving, an analog beam is generally used, that is, the terminal can support only one transmit beam or one receive beam at a same moment. In this case, it is difficult for the terminal to receive, by using one receive beam at a same moment, sidelink data sent by all the surrounding terminals.

Problem 2: If a terminal supports a transmit beam, in a process of determining an optimal transmit beam of a transmit end, the following manner is generally used: The transmit end sends CSI-RSs in turn by using different beams, and the different transmit beams correspond to different CSI-RS resources. A receive end separately receives, by using a same receive beam, the plurality of CSI-RSs sent by the transmit end, measures detected CSI-RSs, selects a CSI-RS resource with an optimal measurement result, and feeds back resource information (for example, a CSI-RS resource index) corresponding to the CSI-RS resource to the transmit end. A transmit beam corresponding to the CSI-RS resource is the optimal transmit beam for the receive end. The transmit end configures a TCI state for the receive end according to the CSI-RS resource fed back by the receive end. The receive end may determine, according to a reference signal associated with the TCI state, a corresponding receive beam and/or a transmit beam used by the transmit end, and use the receive beam for receiving.

Problem 3: If a terminal supports a receive beam, an optimal receive beam needs to be determined. In a process of determining the receive beam, a transmit end sends CSI-RSs by using a same transmit beam, and a receive end respectively receives the CSI-RSs by using different receive beams, performs measurement, and selects an optimal receive beam based on a measurement result. However, if the transmit end obtains a transmission resource based on an independent selection manner (that is, the foregoing second mode), it is difficult for the receive end to learn of the transmission resource of the transmit end in advance, and the transmission resource of the transmit end may also be preempted by another terminal. Therefore, a special mechanism needs to be introduced to perform selection of a receive beam. In the special mechanism, for example, a CSI-RS resource that is sent by the transmit end and that is used by the receive end to determine a receive beam cannot be preempted by another terminal, or a new CSI-RS structure is introduced.

It can be learned from the foregoing that, if a receive end supports beam-based transmission, the foregoing three problems are all problems that need to be resolved. In addition, if a terminal has a beam correspondence (beam correspondence) capability, the terminal may determine a transmit beam based on a receive beam. In this case, a process of determining a transmit beam may be simplified.

Based on the foregoing problems, this application proposes a sidelink transmission solution. A transmit end device obtains capability information of a receive end device, for example, whether the receive end device supports a receive beam, or whether the receive end device has beam correspondence, and the transmit end device executes a corresponding process such as beam selection or beam indication according to the capability information of the receive end device.

It should be noted that, in a case in which no descriptions are provided for a beam in embodiments of this application, the beam may refer to a transmit beam and/or a receive beam. The beam may be generated through beamforming (beamforming) or spatial domain filtering. The spatial domain filtering may be implemented by using a spatial domain filter (spatial domain filter). Beamforming and spatial domain filtering may be understood as the same, or one beam corresponds to one spatial domain filter. Transmit beam shaping and spatial domain transmission filtering may be understood as the same, or a transmit beam corresponds to a spatial domain transmission filter (spatial domain transmission filter). Receive beam shaping and spatial domain reception filtering may be understood as the same, or a receive beam corresponds to a spatial domain reception filter (spatial domain reception filter). In some embodiments, a spatial domain transmission filter may be referred to as a spatial domain sending filter. In some embodiments, a spatial domain reception filter may also be referred to as a directional spatial domain reception filter.

The following describes the technical solutions in this application in detail by specific embodiments.

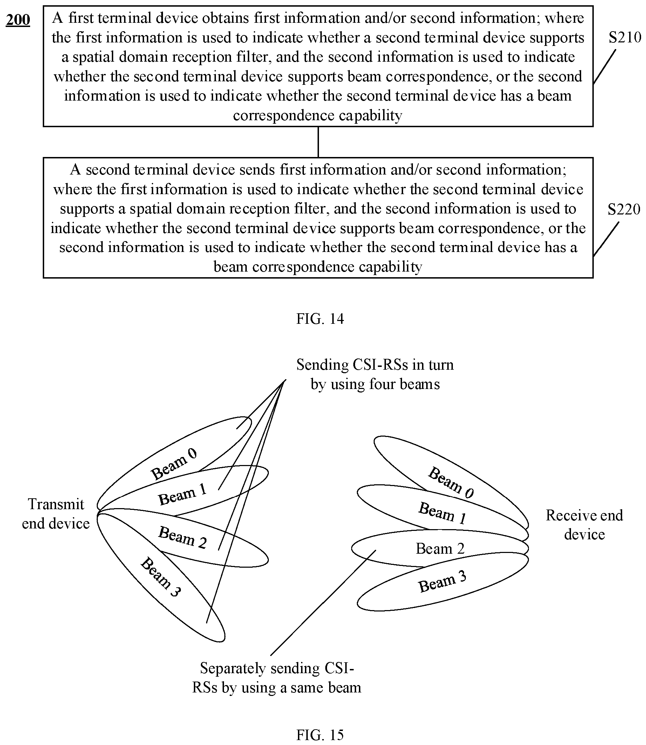

FIG. 14 is a schematic flowchart of a wireless communication method 200 according to an embodiment of this application. As shown in FIG. 14, the wireless communication method 200 may include at least a part of the following content:

S210: A first terminal device obtains first information and/or second information, where the first information is used to indicate whether a second terminal device supports a spatial domain reception filter, and the second information is used to indicate whether the second terminal device supports beam correspondence, or the second information is used to indicate whether the second terminal device has a beam correspondence capability.

S220: A second terminal device sends first information and/or second information, where the first information is used to indicate whether the second terminal device supports a spatial domain reception filter, and the second information is used to indicate whether the second terminal device supports beam correspondence, or the second information is used to indicate whether the second terminal device has a beam correspondence capability.

In this embodiment of this application, the first terminal device is a transmit end device, and the second terminal device is a receive end device.

In some embodiments, a spatial domain transmission filter (spatial domain transmission filter) may also be referred to as a transmit beam (transmission beam), a spatial relation (Spatial relation), a spatial setting (spatial setting), or a spatial Tx parameter (Spatial TX parameter).

In some embodiments, a spatial domain reception filter (spatial domain receive filter) may also be referred to as a receive beam (reception beam) or a spatial Rx parameter (Spatial RX parameter).

In some embodiments, a spatial domain transmission filter and a spatial domain reception filter are collectively referred to as spatial domain filters, the spatial domain transmission filter may also be referred to as a transmit end spatial domain filter, and the spatial domain reception filter may also be referred to as a receive end spatial domain filter or a receive beam.

In some embodiments, the first terminal device may obtain the first information and/or the second information by the second terminal device.

In some embodiments, the first terminal device may also obtain the first information and/or the second information by pre-configuration information or protocol-specified information.

In some embodiments, the first terminal device may further obtain the first information and/or the second information by a network device.

For example, sidelink bandwidth part (SL BWP) configuration information or resource pool configuration information includes indication information, where the indication information is used to indicate whether a spatial domain reception filter is supported. If the indication information indicates that a spatial domain reception filter is not supported, none of terminals supports a spatial domain reception filter, that is, a spatial domain reception filter is not used to receive sidelink data.

For example, sidelink bandwidth part (SL BWP) configuration information or resource pool configuration information includes indication information, where the indication information is used to indicate whether beam correspondence is supported. If the indication information indicates that beam correspondence is supported, a terminal may determine a spatial domain transmission filter based on a spatial domain reception filter, or determine a spatial domain reception filter based on a spatial domain transmission filter.

In a sidelink system, if data transmission is performed by using a beam, a transmit end device needs to determine an optimal transmit beam, and/or a receive end device needs to determine an optimal receive beam. In a process of determining the beam, the transmit end device needs to send a sidelink CSI-RS.

In some embodiments, in a process of determining an optimal transmit beam of a transmit end device, as shown in FIG. 15, the transmit end device may send CSI-RSs in turn by using different beams, and the different transmit beams correspond to different CSI-RS resources. A receive end device separately receives, by using a same receive beam, the plurality of CSI-RSs sent by the transmit end device, measures detected CSI-RSs, selects a CSI-RS resource with an optimal measurement result, and feeds back resource information (for example, a CSI-RS resource index) corresponding to the CSI-RS resource to the transmit end device. A transmit beam corresponding to the CSI-RS resource is the optimal transmit beam for the receive end.

In some embodiments, the receive end device reports or feeds back information about N CSI-RS resources and a measurement result corresponding to the information about the N CSI-RS resources to the transmit end device, and the transmit end device selects one CSI-RS from the N CSI-RS resources, and performs sidelink transmission by using a transmit beam corresponding to the CSI-RS. When the receive end device feeds back the N CSI-RS resources to the transmit end device, the transmit end device may consider that transmit beams corresponding to the N CSI-RS resources are all available transmit beams. The transmit end device selects one CSI-RS resource from the N CSI-RS resources as a target CSI-RS resource (for example, selects a CSI-RS resource corresponding to an optimal measurement result), and uses a beam corresponding to the CSI-RS resource as a target transmit beam. Then, the transmit end device sends sidelink data to the receive end by using the target transmit beam, and notifies the receive end device of the target CSI-RS resource, for example, indicates a TCI state, where a reference signal of the TCI state is the target CSI-RS resource, and a QCL type is QCL-TypeD. The receive end device learns of the target CSI-RS resource according to the TCI state, and then may receive, by using a same receive beam as that for receiving the CSI-RS resource, the sidelink data sent by the transmit end. If the transmit end device may determine that the beam fails, the transmit end device re-selects a transmit beam. Optionally, the transmit end device may select, from the N CSI-RS resources, another CSI-RS resource other than the foregoing target CSI-RS resource as a new target CSI-RS resource, use a transmit beam corresponding to the new target CSI-RS resource as a new target transmit beam, and perform sidelink transmission by using the new target transmit beam.

It should be understood that, in the process of determining the spatial domain transmission filter, that the transmit end device sends CSI-RSs in turn by using different spatial domain transmission filters includes: Each CSI-RS sent by the transmit end device corresponds to a different spatial domain transmission filter, or the transmit end device does not send the CSI-RSs by using a same spatial domain transmission filter. This is not limited in this application.

In some embodiments, the first information is carried by one of the following: sidelink control information (Sidelink Control Information, SCI), a medium access control layer control element (Media Access Control Control Element, MAC CE), or PC5-RRC signalling. Specifically, for example, the SCI includes first stage SCI (carried over a PSCCH) or second stage SCI (carried over a PSSCH).

In some embodiments, the second information is carried by one of the following: SCI, a MAC CE, or PC5-RRC signalling. Specifically, for example, the SCI includes first stage SCI (carried over a PSCCH) or second stage SCI (carried over a PSSCH).

In some embodiments, in a case in which the first terminal device obtains at least the first information, and the first information is used to indicate that the second terminal device supports a spatial domain reception filter, the first terminal device sends first indication information to the second terminal device, where the first indication information is used to instruct the second terminal device to select a spatial domain reception filter.

Correspondingly, in a case in which the second terminal device sends at least the first information, and the first information is used to indicate that the second terminal device supports a spatial domain reception filter, the second terminal device receives first indication information sent by the first terminal device, where the first indication information is used to nstruct the second terminal device to select a spatial domain reception filter.

It should be noted that if the second terminal device supports a spatial domain reception filter, a process of selecting a spatial domain reception filter needs to be performed.

In some embodiments, the first indication information is carried by one of the following: SCI, a MAC CE, or PC5-RRC signalling. Specifically, for example, the SCI includes first stage SCI (carried over a PSCCH) or second stage SCI (carried over a PSSCH).

In some embodiments, the first indication information is further used to indicate a first CSI-RS resource set, a corresponding repetition field in configuration information of the first CSI-RS resource set is set to a first value, and the first value is used to instruct the first terminal device to send a CSI-RS by using a same spatial domain transmission filter.

Specifically, the corresponding repetition field in the configuration information of the first CSI-RS resource set may also be set to a second value, where the second value is used to indicate that the first terminal device sends CSI-RSs by using different spatial domain transmission filters, or is used to indicate that the first terminal device does not send a CSI-RS by using a same spatial domain transmission filter.

For example, the first value is on (on), and the second value is off (off).

It should be noted that in a process of determining a receive beam, a transmit end device sends CSI-RSs by using a same beam, and a receive end device respectively receives the CSI-RSs by using different receive beams, or the receive end device does not receive the CSI-RSs by using a same receive beam.

In some implementations, a same piece of indication information may be used to instruct the second terminal to select a spatial domain reception filter and used to indicate the first CSI-RS resource set, or different pieces of indication information may be used to instruct the second terminal to select a spatial domain reception filter and used to indicate the first CSI-RS resource set, respectively. When different pieces of indication information are used for indication, the different pieces of indication information may be carried in a same signalling or in different signallings.

In some embodiments, the first indication information is carried by first signalling; and
the first signalling includes a first information field, where a value of the first information field is used to instruct the second terminal device to select a spatial domain reception filter, or the value of the first information field is used to instruct the second terminal device to select a spatial domain transmission filter.

In some implementations, the first information field occupies one bit. For example, the value of the first information field is 0, which is used to instruct the second terminal device to select a spatial domain reception filter; or the value of the first information field is 1, which is used to instruct the second terminal device to select a spatial domain transmission filter. Alternatively, the value of the first information field is 1, which is used to instruct the second terminal device to select a spatial domain reception filter; or the value of the first information field is 0, which is used to instruct the second terminal device to select a spatial domain transmission filter.

In some implementations, the first signalling is SCI or a MAC CE.

In some embodiments, in a case in which the first terminal device obtains at least the first information, and the first information is used to indicate that the second terminal device supports a spatial domain reception filter, the first terminal device sends second indication information to the second terminal device, where the second indication information is used to configure at least one TCI state, and each TCI state in the at least one TCI state is associated with one reference signal resource.

Correspondingly, in a case in which the second terminal device sends at least the first information, and the first information is used to indicate that the second terminal device supports a spatial domain reception filter, the second terminal device receives second indication information sent by the first terminal device, where the second indication information is used to configure at least one TCI state, and each TCI state in the at least one TCI state is associated with one reference signal resource.

In some embodiments, the second indication information is carried by one of the following: SCI, a MAC CE, or PC5-RRC signalling. Specifically, for example, the SCI includes first stage SCI (carried over a PSCCH) or second stage SCI (carried over a PSSCH).

In some implementations, the TCI state includes at least one of the following:
a TCI state identifier, an identifier of an associated reference signal, or a quasi co-located (Quasi-co-located, QCL) type.

In some implementations, a TCI state identifier is used to indicate or identify one TCI state.

In some implementations, an identifier of an associated reference signal is used to indicate or identify a reference signal associated with one TCI state. Optionally, the reference signal may include at least one of the following: a CSI-RS, a demodulation reference signal (Demodulation Reference Signal, DMRS), or a phase tracking reference signal (Phase Tracking Reference Signal, PTRS). The DMRS may include a PSCCH DMRS and a PSSCH DMRS.

In some implementations, the QCL type includes one of the following: QCL-TypeA, QCL-TypeB, QCL-TypeC, or QCL-TypeD.

Specifically, when a QCL type included in one TCI state is a QCL-TypeD type, it indicates that sidelink data and a reference signal associated with the TCI state use a same spatial filter, or a receive end device may receive, by using a receive beam corresponding to the reference signal, the sidelink data associated with the TCI state.

In some embodiments, in a case in which the first terminal device obtains at least the first information, and the first information is used to indicate that the second terminal device supports a spatial domain reception filter, the first terminal device sends third indication information to the second terminal device, where the third indication information is used to indicate a first TCI state, the first TCI state is associated with first sidelink data sent by the first terminal device, and the first sidelink data is sidelink data after a time unit in which the third indication information is located.

Correspondingly, in a case in which the second terminal device sends at least the first information, and the first information is used to indicate that the second terminal device supports a spatial domain reception filter, the second terminal device receives third indication information sent by the first terminal device, where the third indication information is used to indicate a first TCI state, the first TCI state is associated with first sidelink data sent by the first terminal device, and the first sidelink data is sidelink data after a time unit in which the third indication information is located.

Specifically, that the first TCI state is associated with first sidelink data sent by the first terminal device may specifically refer to: The second terminal device may determine a first spatial domain reception filter according to the first TCI state, and receive the first sidelink data by using the first spatial domain reception filter.

In some implementations, the first sidelink data includes a PSCCH and a PSSCH.

In some embodiments, the first TCI state is applied to or applicable to transmission of the first sidelink data after a first moment; and a time interval between the first moment and a second moment is greater than or equal to first duration, and the second moment is determined based on a time domain position of the third indication information. That is, the second terminal device determines the first spatial domain reception filter according to the third indication information, and receives the first sidelink data by using the first spatial domain reception end filter. Alternatively, the second terminal device determines, according to the third indication information, a spatial domain transmission filter used by the first terminal device, and the second terminal device determines that the first terminal device sends the first sidelink data by using the spatial domain transmission filter.

In some embodiments, the first duration is determined based on protocol pre-defined information, pre-configuration information, or network configuration information.

In some embodiments, the first duration is determined based on a processing time of the second terminal device, and the processing time includes a time during which the second terminal device obtains the third indication information and applies the first TCI state indicated by the third indication information to the first sidelink data. In some embodiments, the second terminal device obtains the third indication information from received SCI or a received MAC CE.

In some embodiments, the first duration is one or more OFDM symbols.

In some embodiments, the third indication information is carried by one of the following: SCI, a MAC CE, or PC5-RRC signalling. Specifically, for example, the SCI includes first stage SCI (carried over a PSCCH) or second stage SCI (carried over a PSSCH).

In some embodiments, the first terminal device may send, to the second terminal device, at least one of the first indication information, the second indication information, or the third indication information.

In some implementations, in a case in which the first terminal device obtains at least the first information, and the first information is used to indicate that the second terminal device does not support a spatial domain reception filter, the first terminal device does not send first indication information to the second terminal device, where the first indication information is used to instruct the second terminal device to select a spatial domain reception filter.

Correspondingly, in a case in which the second terminal device sends at least the first information, and the first information is used to indicate that the second terminal device does not support a spatial domain reception filter, the second terminal device does not expect the first terminal device to send first indication information, where the first indication information is used to instruct the second terminal device to select a spatial domain reception filter.

In some implementations, in a case in which the first terminal device obtains at least the first information, and the first information is used to indicate that the second terminal device does not support a spatial domain reception filter, the first terminal device does not send second indication information to the second terminal device, where the second indication information is used to configure at least one transmission configuration indication TCI state, and each TCI state in the at least one TCI state is associated with one reference signal resource.

Correspondingly, in a case in which the second terminal device sends at least the first information, and the first information is used to indicate that the second terminal device does not support a spatial domain reception filter, the second terminal device does not expect the first terminal device to send second indication information, where the second indication information is used to configure at least one transmission configuration indication TCI state, and each TCI state in the at least one TCI state is associated with one reference signal resource.

In some implementations, in a case in which the first terminal device obtains at least the first information, and the first information is used to indicate that the second terminal device does not support a spatial domain reception filter, the first terminal device does not send third indication information to the second terminal device, where the third indication information is used to indicate a first TCI state, the first TCI state is associated with first sidelink transmission, and first sidelink data is sidelink data after a time unit in which the third indication information is located.

Correspondingly, in a case in which the second terminal device sends at least the first information, and the first information is used to indicate that the second terminal device does not support a spatial domain reception filter, the second terminal device does not expect the first terminal device to send third indication information, where the third indication information is used to indicate a first TCI state, the first TCI state is associated with first sidelink transmission, and first sidelink data is sidelink data after a time unit in which the third indication information is located.

Specifically, in a case in which the first terminal device obtains at least the first information, and the first information is used to indicate that the second terminal device does not support a spatial domain reception filter, the first terminal device does not send, to the second terminal device, at least one of the first indication information, the second indication information, or the third indication information.

In some implementations, in a case in which the first terminal device obtains at least the first information, and the first information is used to indicate that the second terminal device does not support a spatial domain reception filter, when the first terminal device obtains CRI and/or a measurement result reported by the second terminal device, the first terminal device selects one reference signal as a target reference signal, uses a spatial domain transmission filter corresponding to the target reference signal as a target spatial domain transmission filter, and sends sidelink data to the second terminal device by using the target spatial domain transmission filter. The first terminal device does not need to send, to the second terminal device, indication information used to indicate the target reference signal.

In some embodiments, in a case in which the first terminal device obtains at least the second information, and the second information is used to indicate that the second terminal device supports beam correspondence, or the second information is used to indicate that the second terminal device has a beam correspondence capability, the first terminal device sends fourth indication information to the second terminal device. The fourth indication information is used to indicate a target reference signal, and the target reference signal is used by the second terminal device to determine a target spatial domain reception filter and a target spatial domain transmission filter corresponding to the target spatial domain reception filter.

In some embodiments, in a case in which the second terminal device sends at least the second information, and the second information is used to indicate that the second terminal device supports beam correspondence, or the second information is used to indicate that the second terminal device has a beam correspondence capability, the second terminal device receives fourth indication information sent by the first terminal device. The fourth indication information is used to indicate a target reference signal, and the second terminal device determines a target spatial domain reception filter based on the target reference signal and determines a target spatial domain transmission filter corresponding to the target spatial domain reception filter.

In some embodiments, the fourth indication information is used to indicate a second TCI state. The second terminal device determines a target reference signal according to the second TCI state, for example, uses a reference signal associated with the second TCI state as the target reference signal. The second terminal device determines a target spatial domain reception filter based on the target reference signal and determines a target spatial domain transmission filter corresponding to the target spatial domain reception filter.

In some embodiments, in a case in which the first terminal device sends the fourth indication information to the second terminal device, the first terminal device determines an A^{th} spatial domain reception filter, and determines, by using the A^{th} spatial domain reception filter, receiving of second sidelink data (including a PSCCH, or a PSSCH, or a PSFCH) sent by the second terminal device. The first terminal device supports beam correspondence or the first terminal device has a beam correspondence capability. The A^{th} spatial domain reception filter is determined based on a C^{th} spatial domain transmission filter, and the C^{th} spatial domain transmission filter is determined based on the target reference signal.

In some embodiments, in a case in which the second terminal device receives the fourth indication information sent by the first terminal device, the second terminal device determines the target reference signal indicated by the fourth indication information, determines a B^{th} spatial domain reception filter based on the target reference signal, determines a corresponding D^{th} spatial domain transmission filter based on the B^{th} spatial domain reception filter because the second terminal device has beam correspondence, and sends the second sidelink data (including the PSCCH, or the PSSCH, or the PSFCH) to the first terminal device by using the D^{th} spatial domain transmission filter.

For example, the first terminal device determines the target reference signal according to the fourth indication information, and may determine the corresponding spatial domain transmission filter based on the target reference signal, that is, the C^{th} spatial domain transmission filter. Because the first terminal device has a beam correspondence capability, the first terminal device may determine a corresponding spatial domain reception filter according to a spatial domain transmission filter. Therefore, the first terminal device may determine the corresponding A^{th} spatial domain reception filter according to the C^{th} spatial domain transmission filter. Correspondingly, the second terminal device determines the target reference signal according to the fourth indication information, and may determine the corresponding spatial domain reception filter based on the target reference signal, for example, the B^{th} spatial domain reception filter. Because the second terminal device has a beam correspondence capability, the second terminal device may determine a corresponding spatial domain transmission filter according to a spatial domain reception filter. Therefore, the second terminal device may determine the corresponding D^{th} spatial domain transmission filter based on the B^{th} spatial domain reception filter. When the second terminal device sends sidelink data by using the D^{th} spatial domain transmission filter, the first terminal device may receive the sidelink data by using the A^{th} spatial domain reception filter.

In some embodiments, the fourth indication information is carried by one of the following: SCI, a MAC CE, or PC5-RRC signalling. Specifically, for example, the SCI includes first stage SCI (carried over a PSCCH) or second stage SCI (carried over a PSSCH).

In some embodiments, in a case in which the first terminal device obtains at least the second information, and the second information is used to indicate that the second terminal device supports beam correspondence, or the second information is used to indicate that the second terminal device has a beam correspondence capability, the first terminal device sends third sidelink data to the second terminal device by using an X^{th} spatial domain transmission filter, and the first terminal device receives, by using a Z^{th} spatial domain reception filter, a PSFCH sent by the second terminal device. The PSFCH carries sidelink feedback information corresponding to the third sidelink data, the first terminal device supports beam correspondence or the first terminal device has a beam correspondence capability, and the Z^{th} spatial domain reception filter is determined based on the X^{th} spatial domain transmission filter.

In some embodiments, in a case in which the second terminal device sends at least the second information, and the second information is used to indicate that the second terminal device supports beam correspondence, or the second information is used to indicate that the second terminal device has a beam correspondence capability, the second terminal device receives, by using a P^{th} spatial domain reception filter, third sidelink data sent by the first terminal device, and the second terminal device sends a PSFCH to the first terminal device by using a Q^{th} spatial domain transmission filter. The PSFCH carries sidelink feedback information corresponding to the third sidelink data, and the Q^{th} spatial domain transmission filter is determined based on the P^{th} spatial domain reception filter.

For example, the first terminal device sends third sidelink data (including a PSCCH or a PSSCH) to the second terminal device, and sends indication information, for example, the indication information indicates a TCI state or a target reference signal resource. The second terminal device determines a P^{th} spatial domain reception filter according to the indication information, and receives the third sidelink data by using the spatial domain reception filter. When the second terminal device needs to send sidelink feedback information of the third sidelink data to the first terminal device, the second terminal device may determine, by using beam correspondence and according to the P^{th} spatial domain reception filter, the Q^{th} spatial domain transmission filter for sending a PSFCH. Correspondingly, the first terminal device determines an X^{th} spatial domain transmission filter used to send the third sidelink data, determines, according to beam correspondence, a Z^{th} spatial domain reception filter corresponding to the X^{th} spatial domain transmission filter, and receives, by using the Z^{th} spatial domain reception filter, the PSFCH sent by the second terminal device.

In some embodiments, in a case in which the first terminal device obtains at least the second information, and the second information is used to indicate that the second terminal device supports beam correspondence (beam correspondence), or the second information is used to indicate that the second terminal device has a beam correspondence capability, the first terminal device sends a plurality of CSI-RSs in a same slot by using a same spatial domain transmission filter. The plurality of CSI-RSs are used by the second terminal device to select a spatial domain reception filter and a spatial domain transmission filter corresponding to the spatial domain reception filter.

In some embodiments, the first terminal device sends a plurality of CSI-RSs in a same slot by using a same spatial domain transmission filter. If the first terminal device has beam correspondence, the first terminal device may determine a spatial domain reception filter according to the spatial domain transmission filter, and use the spatial domain reception filter as a preferred spatial domain reception filter or a target spatial domain reception filter. In addition, the first terminal device receives, by using the spatial domain reception filter, sidelink data sent by the second terminal. In some embodiments, in a case in which the second terminal device sends at least the second information, and the second information is used to indicate that the second terminal device supports beam correspondence, or the second information is used to indicate that the second terminal device has a beam correspondence capability, the second terminal device selects a spatial domain reception filter according to a plurality of CSI-RSs sent by the first terminal device in a same slot by using a same spatial domain transmission filter, and the second terminal device determines a spatial domain transmission filter according to the spatial domain reception filter.

In embodiments of this application, if the second terminal device has beam correspondence, a corresponding optimal spatial domain transmission filter may be determined based on an optimal spatial domain reception filter selected in a process of selecting a spatial domain reception filter. The optimal spatial domain transmission filter may be used as a spatial domain transmission filter for the second terminal device sends sidelink data to the first terminal device. In this way, the following may be avoided: In a process of the selection of the spatial domain transmission filter of the second terminal device, the second terminal device sends a plurality of CSI-RSs to the first terminal device, and the first terminal device reports a CSI-RS resource and a measurement result to the second terminal device. In addition, a process such as in which the second terminal device configures a TCI state for the first terminal device may be avoided, which simplifies a process of selecting a spatial domain transmission filter.

Therefore, in embodiments of this application, a first terminal device obtains first information and/or second information, where the first information is used to indicate whether a second terminal device supports a spatial domain reception filter, and the second information is used to indicate whether the second terminal device supports beam correspondence, or the second information is used to indicate whether the second terminal device has a beam correspondence capability. Therefore, the first terminal device executes a corresponding process such as beam selection or beam indication according to the first information and/or the second information.

That is, in embodiments of this application, the first terminal device and the second terminal device exchange capability information, for example, whether the second terminal device supports a spatial domain reception filter, whether the second terminal device has beam correspondence, or whether the second terminal device supports beam correspondence, and the first terminal device executes the corresponding process such as beam selection or beam indication according to the capability information of the second terminal device.

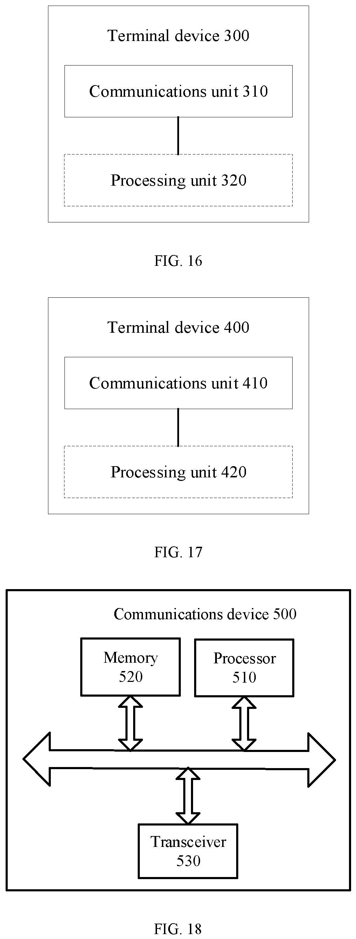

The foregoing describes method embodiments of this application in detail with reference to FIG. 14 to FIG. 15. The following describes apparatus embodiments of this application in detail with reference to FIG. 16 to FIG. 17. It should be understood that the apparatus embodiments correspond to the method embodiments. For similar descriptions, refer to the method embodiments.

FIG. 16 is a schematic block diagram of a terminal device 300 according to an embodiment of this application. The terminal device 300 is a first terminal device. As shown in FIG. 16, the terminal device 300 includes:
a communications unit 310, configured to obtain first information and/or second information,
where the first information is used to indicate whether a second terminal device supports a spatial domain reception filter; and
the second information is used to indicate whether the second terminal device supports beam correspondence, or the second information is used to indicate whether the second terminal device has a beam correspondence capability.

In some embodiments, in a case in which the first terminal device obtains at least the first information, and the first information is used to indicate that the second terminal device supports a spatial domain reception filter, the communications unit 310 is further configured to send first indication information to the second terminal device, where the first indication information is used to instruct the second terminal device to select a spatial domain reception filter.

In some embodiments, the first indication information is further used to indicate a first channel state information reference signal CSI-RS resource set, a corresponding repetition field in configuration information of the first CSI-RS resource set is set to a first value, and the first value is used to instruct the first terminal device to send a CSI-RS by using a same spatial domain transmission filter.

In some embodiments, the first indication information is carried by first signalling;
the first signalling includes a first information field, where a value of the first information field is used to instructindicate the second terminal device to select a spatial domain reception filter, or the value of the first information field is used to instruct the second terminal device to select a spatial domain transmission filter.

In some embodiments, the first information field occupies one bit.

In some embodiments, the first signalling is sidelink control information SCI or a medium access control layer control element MAC CE.

In some embodiments, in a case in which the first terminal device obtains at least the first information, and the first information is used to indicate that the second terminal device supports a spatial domain reception filter, the communications unit 310 is further configured to send second indication information to the second terminal device, where the second indication information is used to configure at least one transmission configuration indication TCI state, and each TCI state in the at least one TCI state is associated with one reference signal resource.

In some embodiments, the TCI state includes at least one of the following:
a TCI state identifier, an identifier of an associated reference signal, or a quasi co-located QCL type.

In some embodiments, in a case in which the first terminal device obtains at least the first information, and the first information is used to indicate that the second terminal device supports a spatial domain reception filter, the communications unit 310 is further configured to send third indication information to the second terminal device, where the third indication information is used to indicate a first TCI state, the first TCI state is associated with first sidelink data sent by the first terminal device, and the first sidelink data is sidelink data after a time unit in which the third indication information is located.

In some embodiments, in a case in which the first terminal device obtains at least the first information, and the first information is used to indicate that the second terminal device does not support a spatial domain reception filter, the first terminal device does not send first indication information to the second terminal device, where the first indication information is used to instruct the second terminal device to select a spatial domain reception filter; or, in a case in which the first terminal device obtains at least the first information, and the first information is used to indicate that the second terminal device does not support a spatial domain reception filter, the first terminal device does not send second indication information to the second terminal device, where the second indication information is used to configure at least one transmission configuration indication TCI state, and each TCI state in the at least one TCI state is associated with one reference signal resource; or, in a case in which the first terminal device obtains at least the first information, and the first information is used to indicate that the second terminal device does not support a spatial domain reception filter, the first terminal device does not send third indication information to the second terminal device, where the third indication information is used to indicate a first TCI state, the first TCI state is associated with first sidelink transmission, and first sidelink data is sidelink data after a time unit in which the third indication information is located.

In some implementations, in a case in which the first terminal device obtains at least the first information, and the first information is used to indicate that the second terminal device does not support a spatial domain reception filter, when the first terminal device obtains CRI and/or a measurement result reported by the second terminal device, the first terminal device selects one reference signal as a target reference signal, uses a spatial domain transmission filter corresponding to the target reference signal as a target spatial domain transmission filter, and sends sidelink data to the second terminal device by using the target spatial domain transmission filter. The first terminal device does not need to send, to the second terminal device, indication information used to indicate the target reference signal.

In some embodiments, the first TCI state is applied to or applicable to transmission of the first sidelink data after a first moment; and a time interval between the first moment and a second moment is greater than or equal to first duration, and the second moment is determined based on a time domain position of the third indication information. That is, the second terminal device determines a first spatial domain reception filter according to the third indication information, and receives the first sidelink data by using the first spatial domain reception end filter. Alternatively, the second terminal device determines, according to the third indication information, a spatial domain transmission filter used by the first terminal device, and the second terminal device determines that the first terminal device sends the first sidelink data by using the spatial domain transmission filter.

In some embodiments, the first duration is determined based on protocol pre-defined information, pre-configuration information, or network configuration information.

In some embodiments, the first duration is determined based on a processing time of the second terminal device, and the processing time includes a time during which the second terminal device obtains the third indication information and applies the first TCI state indicated by the third indication information to the first sidelink data. In some embodiments, the second terminal device obtains the third indication information from received SCI or a received MAC CE.

In some embodiments, the first duration is one or more OFDM symbols.

In some embodiments, the first information is carried by one of the following: SCI, a MAC CE, or PC5-RRC signalling.

In some embodiments, in a case in which the second terminal device sends at least the second information, and the second information is used to indicate that the second terminal device supports beam correspondence, or the second information is used to indicate that the second terminal device has a beam correspondence capability, the second terminal device receives, by using a P^{th} spatial domain reception filter, third sidelink data sent by the first terminal device, and the second terminal device sends a PSFCH to the first terminal device by using a Q^{th} spatial domain transmission filter. The PSFCH carries sidelink feedback information corresponding to the third sidelink data, and the Q^{th} spatial domain transmission filter is determined based on the P^{th} spatial domain reception filter.

For example, the first terminal device sends third sidelink data (including a PSCCH or a PSSCH) to the second terminal device, and sends indication information, for example, the indication information indicates a TCI state or a target reference signal resource. The second terminal device determines a P^{th} spatial domain reception filter according to the indication information, and receives the third sidelink data by using the spatial domain reception filter. When the second terminal device needs to send sidelink feedback information of the third sidelink data to the first terminal device, the second terminal device may determine, by using beam correspondence and according to the P^{th} spatial domain reception filter, the Q^{th} spatial domain transmission filter for sending a PSFCH. Correspondingly, the first terminal device determines an X^{th} spatial domain transmission filter used to send the third sidelink data, determines, according to beam correspondence, a Z^{th} spatial domain reception filter corresponding to the X^{th} spatial domain transmission filter, and receives, by using the Z spatial domain reception filter, the PSFCH sent by the second terminal device.

In some embodiments, in a case in which the first terminal device obtains at least the second information, and the second information is used to indicate that the second terminal device supports beam correspondence, or the second information is used to indicate that the second terminal device has a beam correspondence capability, the communications unit 310 is further configured to send fourth indication information to the second terminal device;
the fourth indication information is used to indicate a target reference signal, and the target reference signal is used by the second terminal device to determine a target spatial domain reception filter and a target spatial domain transmission filter corresponding to the target spatial domain reception filter.

In some embodiments, the fourth indication information is used to indicate a second TCI state. The second terminal device determines a target reference signal according to the second TCI state, for example, uses a reference signal associated with the second TCI state as the target reference signal. The second terminal device determines a target spatial domain reception filter based on the target reference signal and determines a target spatial domain transmission filter corresponding to the target spatial domain reception filter.

In some embodiments, the terminal device 300 further includes a processing unit 320;
the processing unit 320 is configured to determine an A^{th} spatial domain reception filter, and determine, by using the A^{th} spatial domain reception filter, receiving of second sidelink data sent by the second terminal device;
the first terminal device supports beam correspondence or the first terminal device has a beam correspondence capability, the A^{th} spatial domain reception filter is determined based on a C^{th} spatial domain transmission filter, and the C^{th} spatial domain transmission filter is determined based on the target reference signal.

In some embodiments, in a case in which the first terminal device obtains at least the second information, and the second information is used to indicate that the second terminal device supports beam correspondence, or the second information is used to indicate that the second terminal device has a beam correspondence capability, the communications unit 310 is further configured to send third sidelink data to the second terminal device by using an X^{th} spatial domain transmission filter. The communications unit 310 is further configured to receive, by using a Z^{th} spatial domain reception filter, a physical sidelink feedback channel PSFCH sent by the second terminal device;
the PSFCH carries sidelink feedback information corresponding to the third sidelink data, the first terminal device supports beam correspondence or the first terminal device has a beam correspondence capability, and the Z^{th} spatial domain reception filter is determined based on the X^{th} spatial domain transmission filter.

In some embodiments, in a case in which the first terminal device obtains at least the second information, and the second information is used to indicate that the second terminal device supports beam correspondence, or the second information is used to indicate that the second terminal device has a beam correspondence capability, the communications unit 310 is further configured to send a plurality of CSI-RSs in a same slot by using a same spatial domain transmission filter. The plurality of CSI-RSs are used by the second terminal device to select a spatial domain reception filter and a spatial domain transmission filter corresponding to the spatial domain reception filter.

In some embodiments, the second information is carried by one of the following: SCI, a MAC CE, or PC5-RRC signalling.

In some embodiments, the foregoing communications unit may be a communications interface or a transceiver, or an input/output interface of a communications chip or a system-on-chip. The processing unit may be one or more processors.

It should be understood that the terminal device 300 according to this embodiment of this application may correspond to a first terminal device in the method embodiments of this application, and the foregoing and other operations and/or functions of units in the terminal device 300 are respectively used to implement corresponding procedures of the first terminal device in the method 200 shown in FIG. 14 to FIG. 15. For brevity, details are not described herein again.

FIG. 17 is a schematic block diagram of a terminal device 400 according to an embodiment of this application. The terminal device 400 is a second terminal device. As shown in FIG. 17, the terminal device 400 includes:
a communications unit 410, configured to send first information and/or second information to a first terminal device;
the first information is used to indicate whether the second terminal device supports a spatial domain reception filter;
the second information is used to indicate whether the second terminal device supports beam correspondence, or the second information is used to indicate whether the second terminal device has a beam correspondence capability.

In some embodiments, in a case in which the second terminal device sends at least the first information, and the first information is used to indicate that the second terminal device supports a spatial domain reception filter, the communications unit 410 is further configured to receive first indication information sent by the first terminal device, where the first indication information is used to instruct the second terminal device to select a spatial domain reception filter.

In some embodiments, the first indication information is further used to indicate a first channel state information reference signal CSI-RS resource set, a corresponding repetition field in configuration information of the first CSI-RS resource set is set to a first value, and the first value is used to instruct the first terminal device to send a CSI-RS by using a same spatial domain transmission filter.

In some embodiments, the first indication information is carried by first signalling;

the first signalling includes a first information field, where a value of the first information field is used to instruct the second terminal device to select a spatial domain reception filter, or the value of the first information field is used to instruct the second terminal device to select a spatial domain transmission filter.

In some embodiments, the first information field occupies one bit.

In some embodiments, the first signalling is sidelink control information SCI or a medium access control layer control element MAC CE.

In some embodiments, in a case in which the second terminal device sends at least the first information, and the first information is used to indicate that the second terminal device supports a spatial domain reception filter, the communications unit 410 is further configured to receive second indication information sent by the first terminal device;
the second indication information is used to configure at least one transmission configuration indication TCI state, and each TCI state in the at least one TCI state is associated with one reference signal resource.

In some embodiments, the TCI state includes at least one of the following:
a TCI state identifier, an identifier of an associated reference signal, or a quasi co-located QCL type.

In some embodiments, in a case in which the second terminal device sends at least the first information, and the first information is used to indicate that the second terminal device supports a spatial domain reception filter, the communications unit 410 is further configured to receive third indication information sent by the first terminal device;
the third indication information is used to indicate a first TCI state, the first TCI state is associated with first sidelink data sent by the first terminal device, and the first sidelink data is sidelink data after a time unit in which the third indication information is located.

In some embodiments, in a case in which the second terminal device sends at least the first information, and the first information is used to indicate that the second terminal device does not support a spatial domain reception filter, the terminal device 400 further includes a processing unit 420;

the processing unit 420 is configured to skip expecting the first terminal device to send first indication information, where the first indication information is used to instructthe second terminal device to select a spatial domain reception filter; or,
the processing unit 420 is configured to skip expecting the first terminal device to send second indication information, where the second indication information is used to configure at least one transmission configuration indication TCI state, and each TCI state in the at least one TCI state is associated with one reference signal resource; or,
the processing unit 420 is configured to skip expecting the first terminal device to send third indication information, where the third indication information is used to indicate a first TCI state, the first TCI state is associated with first sidelink transmission, and first sidelink data is sidelink data after a time unit in which the third indication information is located.

In some embodiments, the first information is carried by one of the following: SCI, a MAC CE, or PC5-RRC signalling.

In some embodiments, the terminal device 400 further includes a processing unit 420;
in a case in which the second terminal device sends at least the second information, and the second information is used to indicate that the second terminal device supports beam correspondence, or the second information is used to indicate that the second terminal device has a beam correspondence capability, the communications unit 410 is further configured to receive fourth indication information sent by the first terminal device, where the fourth indication information is used to indicate a target reference signal; and
the processing unit 420 is configured to determine a target spatial domain reception filter based on the target reference signal, and determine a target spatial domain transmission filter corresponding to the target spatial domain reception filter.

In some embodiments, the fourth indication information is used to indicate a second TCI state. The second terminal device determines a target reference signal according to the second TCI state, for example, uses a reference signal associated with the second TCI state as the target reference signal. The second terminal device determines a target spatial domain reception filter based on the target reference signal and determines a target spatial domain transmission filter corresponding to the target spatial domain reception filter.

In some embodiments, in a case in which the second terminal device sends at least the second information, and the second information is used to indicate that the second terminal device supports beam correspondence, or the second information is used to indicate that the second terminal device has a beam correspondence capability, the communications unit 410 is further configured to receive, by using a P^{th} spatial domain reception filter, third sidelink data sent by the first terminal device;
the communications unit 410 is further configured to send a physical sidelink feedback channel PSFCH to the first terminal device by using a Q^{th} spatial domain transmission filter;
the PSFCH carries sidelink feedback information corresponding to the third sidelink data, and the Q^{th} spatial domain transmission filter is determined based on the P^{th} spatial domain reception filter.

In some embodiments, in a case in which the second terminal device sends at least the second information, and the second information is used to indicate that the second terminal device supports beam correspondence, or the second information is used to indicate that the second terminal device has a beam correspondence capability, the second terminal device receives, by using a P^{th} spatial domain reception filter, third sidelink data sent by the first terminal device, and the second terminal device sends a PSFCH to the first terminal device by using a Q^{th} spatial domain transmission filter. The PSFCH carries sidelink feedback information corresponding to the third sidelink data, and the Q^{th} spatial domain transmission filter is determined based on the P^{th} spatial domain reception filter.

For example, the first terminal device sends third sidelink data (including a PSCCH or a PSSCH) to the second terminal device, and sends indication information, for example, the indication information indicates a TCI state or a target reference signal resource. The second terminal device determines a P^{th} spatial domain reception filter according to the indication information, and receives the third sidelink data by using the spatial domain reception filter. When the second terminal device needs to send sidelink feedback information of the third sidelink data to the first terminal device, the second terminal device may determine, by using beam correspondence and according to the P^{th} spatial domain reception filter, the Q^{th} spatial domain transmission filter for sending a PSFCH. Correspondingly, the first terminal device determines an X^{th} spatial domain transmission filter used to send the third sidelink data, determines, according to beam correspondence, a Z^{th} spatial domain reception filter corresponding to the X^{th} spatial domain transmission filter, and receives, by using the Z^{th} spatial domain reception filter, the PSFCH sent by the second terminal device.

In some embodiments, the terminal device 400 further includes a processing unit 420;
In a case in which the second terminal device sends at least the second information, and the second information is used to indicate that the second terminal device supports beam correspondence, or the second information is used to indicate that the second terminal device has a beam correspondence capability, the method further includes:
the processing unit 420 is configured to select a spatial domain reception filter according to a plurality of CSI-RSs sent by the first terminal device in a same slot by using a same spatial domain transmission filter; and
the processing unit 420 is further configured to determine a spatial domain transmission filter according to the spatial domain reception filter.

In some embodiments, in a case in which the second terminal device receives the fourth indication information sent by the first terminal device, the second terminal device determines the target reference signal indicated by the fourth indication information, determines a B^{th} spatial domain reception filter based on the target reference signal, determines a corresponding D^{th} spatial domain transmission filter based on the B^{th} spatial domain reception filter because the second terminal device has beam correspondence, and sends second sidelink data (including a PSCCH, or a PSSCH, or a PSFCH) to the first terminal device by using the D^{th} spatial domain transmission filter.

For example, the first terminal device determines the target reference signal according to the fourth indication information, and may determine the corresponding spatial domain transmission filter based on the target reference signal, that is, the C^{th} spatial domain transmission filter. Because the first terminal device has a beam correspondence capability, the first terminal device may determine a corresponding spatial domain reception filter according to a spatial domain transmission filter. Therefore, the first terminal device may determine the corresponding A^{th} spatial domain reception filter according to the C^{th} spatial domain transmission filter. Correspondingly, the second terminal device determines the target reference signal according to the fourth indication information, and may determine the corresponding spatial domain reception filter based on the target reference signal, for example, the B^{th} spatial domain reception filter. Because the second terminal device has a beam correspondence capability, the second terminal device may determine a corresponding spatial domain transmission filter according to a spatial domain reception filter. Therefore, the second terminal device may determine the corresponding D^{th} spatial domain transmission filter based on the B^{th} spatial domain reception filter. When the second terminal device sends sidelink data by using the D^{th} spatial domain transmission filter, the first terminal device may receive the sidelink data by using the A^{th} spatial domain reception filter.

In some embodiments, the second information is carried by one of the following: SCI, a MAC CE, or PC5-RRC signalling.

In some embodiments, the foregoing communications unit may be a communications interface or a transceiver, or an input/output interface of a communications chip or a system-on-chip. The processing unit may be one or more processors.

It should be understood that the terminal device 400 according to this embodiment of this application may correspond to a second terminal device in the method embodiments of this application, and the foregoing and other operations and/or functions of units in the terminal device 400 are respectively used to implement corresponding procedures of the second terminal device in the method 200 shown in FIG. 14 to FIG. 15. For brevity, details are not described herein again.

FIG. 18 is a schematic structural diagram of a communications device 500 according to an embodiment of this application. The communications device 500 shown in FIG. 18 includes a processor 510, and the processor 510 may invoke a computer program from a memory and run the computer program to implement a method in embodiments of this application.

In some embodiments, as shown in FIG. 18, the communications device 500 may further include a memory 520. The processor 510 may invoke a computer program from the memory 520 and run the computer program to implement a method in embodiments of this application.

The memory 520 may be a separate component independent of the processor 510, or may be integrated into the processor 510.

In some embodiments, as shown in FIG. 18, the communications device 500 may further include a transceiver 530. The processor 510 may control the transceiver 530 to communicate with another device. Specifically, the processor 510 may send information or data to the another device, or receive information or data sent by the another device.

The transceiver 530 may include a transmitting set and a receiving set. The transceiver 530 may further include an antenna, and a quantity of antennas may be one or more.

In some embodiments, specifically, the communications device 500 may be a first terminal device in embodiments of this application, and the communications device 500 may implement corresponding procedures implemented by a first terminal device in methods in embodiments of this application. For brevity, details are not described herein again.

In some embodiments, specifically, the communications device 500 may be a second terminal device in embodiments of this application, and the communications device 500 may implement corresponding procedures implemented by a second terminal device in methods in embodiments of this application. For brevity, details are not described herein again.

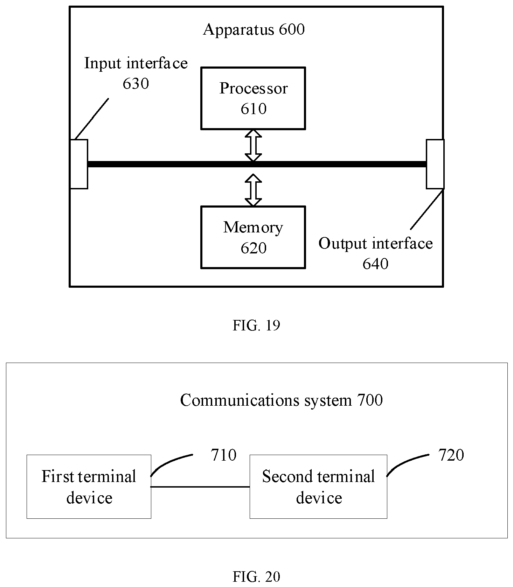

FIG. 19 is a schematic structural diagram of an apparatus according to an embodiment of this application. The apparatus 600 shown in FIG. 19 includes a processor 610, and the processor 610 may invoke a computer program from a memory and run the computer program to implement a method in embodiments of this application.

In some embodiments, as shown in FIG. 19, the apparatus 600 may further include a memory 620. The processor 610 may invoke a computer program from the memory 620 and run the computer program to implement a method in embodiments of this application.

The memory 620 may be a separate component independent of the processor 610, or may be integrated into the processor 610.

In some embodiments, the apparatus 600 may further include an input interface 630. The processor 610 may control the input interface 630 to communicate with another device or chip, and specifically, may obtain information or data sent by the another device or chip.

In some embodiments, the apparatus 600 may further include an output interface 640. The processor 610 may control the output interface 640 to communicate with another device or chip, and specifically, may output information or data to the another device or chip.

In some embodiments, the apparatus may be applied to a first terminal device in embodiments of this application, and the apparatus may implement corresponding procedures implemented by a first terminal device in methods in embodiments of this application. For brevity, details are not described herein again.

In some embodiments, the apparatus may be applied to a second terminal device in embodiments of this application, and the apparatus may implement corresponding procedures implemented by a second terminal device in methods in embodiments of this application. For brevity, details are not described herein again.

In some embodiments, the apparatus mentioned in embodiments of this application may alternatively be a chip, for example, may be a system-level chip, a system chip, a chip system, a system-on-chip, or the like.

FIG. 20 is a schematic block diagram of a communications system 700 according to an embodiment of this application. As shown in FIG. 20, the communications system 700 includes a first terminal device 710 and a second terminal device 720.

The first terminal device 710 may be configured to implement corresponding functions implemented by a first terminal device in the foregoing methods, and the second terminal device 720 may be configured to implement corresponding functions implemented by a second terminal device in the foregoing methods. For brevity, details are not described herein again.

It should be understood that, a processor in embodiments of this application may be an integrated circuit chip having a signal processing capability. In an implementation process, the steps in the foregoing method embodiments may be performed by using an integrated logic circuit of hardware of the processor or instructions in a software form. The processor may be a general-purpose processor, a digital signal processor (Digital Signal Processor, DSP), an application-specific integrated circuit (Application Specific Integrated Circuit, ASIC), a field-programmable gate array (Field Programmable Gate Array, FPGA) or another programmable logic device, a discrete gate or a transistor logic device, or a discrete hardware component. The processor may implement or execute the methods, steps, and logical block diagrams disclosed in embodiments of this application. The general-purpose processor may be a microprocessor, or the processor may be any conventional processor or the like. The steps of the methods disclosed with reference to embodiments of this application may be directly implemented by a hardware decoding processor, or may be implemented by a combination of hardware and software modules in a decoding processor. The software module may be located in a mature storage medium in the art, for example, a random access memory, a flash memory, a read-only memory, a programmable read-only memory, an erasable programmable memory, or a register. The storage medium is located in a memory. The processor reads information from the memory, and completes the steps of the foregoing methods in combination with hardware in the processor.

It may be understood that the memory in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the systems and methods described in this specification includes but is not limited to these memories and any memory of another proper type.

It should be understood that, by way of example but not limitative description, for example, the memory in embodiments of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synch link dynamic random access memory (synch link DRAM, SLDRAM), a direct rambus random access memory (Direct Rambus RAM, DR RAM), or the like. In other words, the memory in embodiments of this application includes but is not limited to these memories and any memory of another proper type.

An embodiment of this application further provides a computer-readable storage medium, configured to store a computer program.

In some embodiments, the computer-readable storage medium may be applied to a first terminal device in embodiments of this application, and the computer program causes a computer to execute a corresponding procedure implemented by a first terminal device in methods in embodiments of this application. For brevity, details are not described herein again.

In some embodiments, the computer-readable storage medium may be applied to a second terminal device in embodiments of this application, and the computer program causes a computer to execute a corresponding procedure implemented by a second terminal device in methods in embodiments of this application. For brevity, details are not described herein again.

An embodiment of this application further provides a computer program product, including computer program instructions.

In some embodiments, the computer program product may be applied to a first terminal device in embodiments of this application, and the computer program instructions cause a computer to execute corresponding procedures implemented by a first terminal device in methods in embodiments of this application. For brevity, details are not described herein again.

In some embodiments, the computer program product may be applied to a second terminal device in embodiments of this application, and the computer program instructions cause a computer to execute corresponding procedures implemented by a second terminal device in methods in embodiments of this application. For brevity, details are not described herein again.

An embodiment of this application further provides a computer program.

In some embodiments, the computer program may be applied to a first terminal device in embodiments of this application. When the computer program runs on a computer, the computer executes corresponding procedures implemented by a first terminal device in methods in embodiments of this application. For brevity, details are not described herein again.

In some embodiments, the computer program may be applied to a second terminal device in embodiments of this application. When the computer program runs on a computer, the computer executes corresponding procedures implemented by a second terminal device in methods in embodiments of this application. For brevity, details are not described herein again.

A person of ordinary skill in the art may be aware that, units and algorithm steps in examples described in combination with embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

Those skilled in the art may clearly understand that, for the purpose of convenient and brief description, for detailed working processes of the foregoing system, apparatus, and unit, refer to the corresponding processes in the foregoing method embodiments, and details are not described herein again.

In the several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not executed. In addition, the displayed or discussed mutual couplings or direct couplings or communication connections may be implemented by using some interfaces. The indirect couplings or communication connections between apparatuses or units may be implemented in electrical, mechanical, or other forms.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions in embodiments of this application essentially, or the part contributing to the prior art, or some of the technical solutions may be implemented in a form of a software product. The computer software product is stored in a storage medium and includes several instructions for instructing a computer device (which may be a personal computer, a server, a network device, or the like) to execute all or some of the steps of the methods in embodiments of this application. The foregoing storage medium includes various media that may store a program code, such as a USB flash drive, a removable hard disk, a read-only memory (Read-only Memory, ROM), a random access memory (Random Access Memory, RAM), a magnetic disk, or an optical disk.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application should be subject to the protection scope of the claims.

## Claims

1. A wireless communication method, comprising:
obtaining, by a first terminal device, first information and/or second information,
wherein the first information is used to indicate whether a second terminal device supports a spatial domain reception filter; and
the second information is used to indicate whether the second terminal device supports beam correspondence, or the second information is used to indicate whether the second terminal device has a beam correspondence capability.

2. The method according to claim 1, wherein
in a case in which the first terminal device obtains at least the first information, and the first information is used to indicate that the second terminal device supports a spatial domain reception filter, the method further comprises:
sending, by the first terminal device, first indication information to the second terminal device, wherein the first indication information is used to instruct the second terminal device to select a spatial domain reception filter.

3. The method according to claim 2, wherein the first indication information is further used to indicate a first channel state information reference signal CSI-RS resource set, a corresponding repetition field in configuration information of the first CSI-RS resource set is set to a first value, and the first value is used to instruct the first terminal device to send a CSI-RS by using a same spatial domain transmission filter.

4. The method according to claim 2, wherein
the first indication information is carried by first signalling; and
the first signalling comprises a first information field, wherein a value of the first information field is used to instruct the second terminal device to select a spatial domain reception filter, or the value of the first information field is used to instruct the second terminal device to select a spatial domain transmission filter.

5. The method according to claim 4, wherein the first information field occupies one bit.

6. The method according to claim 4 or 5, wherein the first signalling is sidelink control information SCI or a medium access control layer control element MAC CE.

7. The method according to any one of claims 1 to 6, wherein
in a case in which the first terminal device obtains at least the first information, and the first information is used to indicate that the second terminal device supports a spatial domain reception filter, the method further comprises:
sending, by the first terminal device, second indication information to the second terminal device, wherein the second indication information is used to configure at least one transmission configuration indication TCI state, and each TCI state in the at least one TCI state is associated with one reference signal resource.

8. The method according to claim 7, wherein
the TCI state comprises at least one of following:
a TCI state identifier, an identifier of an associated reference signal, or a quasi co-located QCL type.

9. The method according to any one of claims 1 to 8, wherein
in a case in which the first terminal device obtains at least the first information, and the first information is used to indicate that the second terminal device supports a spatial domain reception filter, the method further comprises:
sending, by the first terminal device, third indication information to the second terminal device, wherein the third indication information is used to indicate a first TCI state, the first TCI state is associated with first sidelink data sent by the first terminal device, and the first sidelink data is sidelink data after a time unit in which the third indication information is located.

10. The method according to claim 1, wherein
in a case in which the first terminal device obtains at least the first information, and the first information is used to indicate that the second terminal device does not support a spatial domain reception filter, the method further comprises:
skipping sending, by the first terminal device, first indication information to the second terminal device, wherein the first indication information is used to instruct the second terminal device to select a spatial domain reception filter; or,
skipping sending, by the first terminal device, second indication information to the second terminal device, wherein the second indication information is used to configure at least one transmission configuration indication TCI state, and each TCI state in the at least one TCI state is associated with one reference signal resource; or,
skipping sending, by the first terminal device, third indication information to the second terminal device, wherein the third indication information is used to indicate a first TCI state, the first TCI state is associated with first sidelink transmission, and first sidelink data is sidelink data after a time unit in which the third indication information is located.

11. The method according to any one of claims 1 to 10, wherein
the first information is carried by one of following: SCI, a MAC CE, or PC5-RRC signalling.

12. The method according to claim 1, wherein
in a case in which the first terminal device obtains at least the second information, and the second information is used to indicate that the second terminal device supports beam correspondence, or the second information is used to indicate that the second terminal device has a beam correspondence capability, the method further comprises:
sending, by the first terminal device, fourth indication information to the second terminal device,
wherein the fourth indication information is used to indicate a target reference signal, and the target reference signal is used by the second terminal device to determine a target spatial domain reception filter and a target spatial domain transmission filter corresponding to the target spatial domain reception filter.

13. The method according to claim 12, wherein the method further comprises:
determining, by the first terminal device, an A^{th} spatial domain reception filter, and determining, by using the A^{th} spatial domain reception filter, receiving of second sidelink data sent by the second terminal device,
wherein the first terminal device supports beam correspondence or the first terminal device has a beam correspondence capability, the A^{th} spatial domain reception filter is determined based on a C^{th} spatial domain transmission filter, and the C^{th} spatial domain transmission filter is determined based on the target reference signal.

14. The method according to claim 1, wherein
in a case in which the first terminal device obtains at least the second information, and the second information is used to indicate that the second terminal device supports beam correspondence, or the second information is used to indicate that the second terminal device has a beam correspondence capability, the method further comprises:
sending, by the first terminal device, third sidelink data to the second terminal device by using an X^{th} spatial domain transmission filter; and
receiving, by the first terminal device by using a Z^{th} spatial domain reception filter, a physical sidelink feedback channel PSFCH sent by the second terminal device,
wherein the PSFCH carries sidelink feedback information corresponding to the third sidelink data, the first terminal device supports beam correspondence or the first terminal device has a beam correspondence capability, and the Z^{th} spatial domain reception filter is determined based on the X^{th} spatial domain transmission filter.

15. The method according to claim 1, wherein in a case in which the first terminal device obtains at least the second information, and the second information is used to indicate that the second terminal device supports beam correspondence, or the second information is used to indicate that the second terminal device has a beam correspondence capability, the method further comprises:
sending, by the first terminal device, a plurality of CSI-RSs in a same slot by using a same spatial domain transmission filter, wherein the plurality of CSI-RSs are used by the second terminal device to select a spatial domain reception filter and a spatial domain transmission filter corresponding to the spatial domain reception filter.

16. The method according to claim 1, 12, 13, 14, or 15, wherein
the second information is carried by one of following: SCI, a MAC CE, or PC5-RRC signalling.

17. A wireless communication method, comprising:
sending, by a second terminal device, first information and/or second information to a first terminal device,
wherein the first information is used to indicate whether the second terminal device supports a spatial domain reception filter; and
the second information is used to indicate whether the second terminal device supports beam correspondence, or the second information is used to indicate whether the second terminal device has a beam correspondence capability.

18. The method according to claim 17, wherein
in a case in which the second terminal device sends at least the first information, and the first information is used to indicate that the second terminal device supports a spatial domain reception filter, the method further comprises:
receiving, by the second terminal device, first indication information sent by the first terminal device, wherein the first indication information is used to instruct the second terminal device to select a spatial domain reception filter.

19. The method according to claim 18, wherein the first indication information is further used to indicate a first channel state information reference signal CSI-RS resource set, a corresponding repetition field in configuration information of the first CSI-RS resource set is set to a first value, and the first value is used to instruct the first terminal device to send a CSI-RS by using a same spatial domain transmission filter.

20. The method according to claim 18, wherein
the first indication information is carried by first signalling; and
the first signalling comprises a first information field, wherein a value of the first information field is used to instruct the second terminal device to select a spatial domain reception filter, or the value of the first information field is used to instruct the second terminal device to select a spatial domain transmission filter.

21. The method according to claim 20, wherein the first information field occupies one bit.

22. The method according to claim 20 or 21, wherein the first signalling is sidelink control information SCI or a medium access control layer control element MAC CE.

23. The method according to any one of claims 17 to 22, wherein
in a case in which the second terminal device sends at least the first information, and the first information is used to indicate that the second terminal device supports a spatial domain reception filter, the method further comprises:
receiving, by the second terminal device, second indication information sent by the first terminal device,
wherein the second indication information is used to configure at least one transmission configuration indication TCI state, and each TCI state in the at least one TCI state is associated with one reference signal resource.

24. The method according to claim 23, wherein
the TCI state comprises at least one of following:
a TCI state identifier, an identifier of an associated reference signal, or a quasi co-located QCL type.

25. The method according to any one of claims 17 to 24, wherein
in a case in which the second terminal device sends at least the first information, and the first information is used to indicate that the second terminal device supports a spatial domain reception filter, the method further comprises:
receiving, by the second terminal device, third indication information sent by the first terminal device,
wherein the third indication information is used to indicate a first TCI state, the first TCI state is associated with first sidelink data sent by the first terminal device, and the first sidelink data is sidelink data after a time unit in which the third indication information is located.

26. The method according to claim 17, wherein
in a case in which the second terminal device sends at least the first information, and the first information is used to indicate that the second terminal device does not support a spatial domain reception filter, the method further comprises:
skipping expecting, by the second terminal device, the first terminal device to send first indication information, wherein the first indication information is used to instruct the second terminal device to select a spatial domain reception filter; or,
skipping expecting, by the second terminal device, the first terminal device to send second indication information, wherein the second indication information is used to configure at least one transmission configuration indication TCI state, and each TCI state in the at least one TCI state is associated with one reference signal resource; or,
skipping expecting, by the second terminal device, the first terminal device to send third indication information, wherein the third indication information is used to indicate a first TCI state, the first TCI state is associated with first sidelink transmission, and first sidelink data is sidelink data after a time unit in which the third indication information is located.

27. The method according to any one of claims 17 to 26, wherein
the first information is carried by one of following: SCI, a MAC CE, or PC5-RRC signalling.

28. The method according to claim 17, wherein
in a case in which the second terminal device sends at least the second information, and the second information is used to indicate that the second terminal device supports beam correspondence, or the second information is used to indicate that the second terminal device has a beam correspondence capability, the method further comprises:
receiving, by the second terminal device, fourth indication information sent by the first terminal device, wherein the fourth indication information is used to indicate a target reference signal; and
determining, by the second terminal device, a target spatial domain reception filter based on the target reference signal, and determining a target spatial domain transmission filter corresponding to the target spatial domain reception filter.

29. The method according to claim 17, wherein
in a case in which the second terminal device sends at least the second information, and the second information is used to indicate that the second terminal device supports beam correspondence, or the second information is used to indicate that the second terminal device has a beam correspondence capability, the method further comprises:
receiving, by the second terminal device by using a P^{th} spatial domain reception filter, third sidelink data sent by the first terminal device; and
sending, by the second terminal device, a physical sidelink feedback channel PSFCH to the first terminal device by using a Q^{th} spatial domain transmission filter,
wherein the PSFCH carries sidelink feedback information corresponding to the third sidelink data, and the Q^{th} spatial domain transmission filter is determined based on the P^{th} spatial domain reception filter.

30. The method according to claim 17, wherein in a case in which the second terminal device sends at least the second information, and the second information is used to indicate that the second terminal device supports beam correspondence, or the second information is used to indicate that the second terminal device has a beam correspondence capability, the method further comprises:
selecting, by the second terminal device, a spatial domain reception filter according to a plurality of CSI-RSs sent by the first terminal device in a same slot by using a same spatial domain transmission filter; and
determining, by the second terminal device, a spatial domain transmission filter according to the spatial domain reception filter.

31. The method according to claim 17, 28, 29, or 30, wherein
the second information is carried by one of following: SCI, a MAC CE, or PC5-RRC signalling.

32. A terminal device, wherein the terminal device is a first terminal device, and the terminal device comprises:
a communications unit, configured to obtain first information and/or second information,
wherein the first information is used to indicate whether a second terminal device supports a spatial domain reception filter; and
the second information is used to indicate whether the second terminal device supports beam correspondence, or the second information is used to indicate whether the second terminal device has a beam correspondence capability.

33. A terminal device, wherein the terminal device is a second terminal device, and the terminal device comprises:
a communications unit, configured to send first information and/or second information to a first terminal device,
wherein the first information is used to indicate whether the second terminal device supports a spatial domain reception filter; and
the second information is used to indicate whether the second terminal device supports beam correspondence, or the second information is used to indicate whether the second terminal device has a beam correspondence capability.

34. A terminal device, comprising a processor and a memory, wherein the memory is configured to store a computer program, and the processor is configured to invoke the computer program stored in the memory and run the computer program, to cause the terminal device to execute the method according to any one of claims 1 to 16 or cause the terminal device to execute the method according to any one of claims 17 to 31.

35. A chip, comprising a processor, configured to invoke a computer program from a memory and run the computer program, to cause a device on which the chip is installed to execute the method according to any one of claims 1 to 16 or to execute the method according to any one of claims 17 to 31.

36. A computer-readable storage medium, configured to store a computer program, wherein the computer program causes a computer to execute the method according to any one of claims 1 to 16 or to execute the method according to any one of claims 17 to 31.

37. A computer program product, comprising computer program instructions, wherein the computer program instructions cause a computer to execute the method according to any one of claims 1 to 16 or to execute the method according to any one of claims 17 to 31.

38. A computer program, wherein the computer program causes a computer to execute the method according to any one of claims 1 to 16 or to execute the method according to any one of claims 17 to 31.
